# EUROPEAN PATENT APPLICATION

(11) **EP 3 951 584 A1**
(43) Date of publication of application: **09.02.2022**
(21) Application number: 20798877.5
(22) Date of filing: 20.04.2020
(51) Int. Cl.: G06F 3/14

(54) **SCREEN PROJECTION METHOD, ELECTRONIC DEVICE AND SCREEN PROJECTION SYSTEM**

(30) Priority: 28.04.2019 CN 201910350188
(71) Applicant: Huawei Technologies Co., Ltd., Shenzhen, Guangdong 518129 (CN)
(72) Inventor: WANG, Wei, Shenzhen, Guangdong 518129 (CN); WANG, Jinliang, Shenzhen, Guangdong 518129 (CN)
(74) Representative: Gill Jennings & Every LLP
(86) International application number: PCT/CN2020/085528
(87) International publication number: WO 2020/221039

(57) **Abstract**

A screen projection method, an electronic device, and a system are provided. The method includes: When receiving a screen projection indication for first media data (S24), a first electronic device (100) may detect whether a screen projection port of the first electronic device (100) outputs screen projection data, and if the screen projection port of the first electronic device (100) outputs the screen projection data, the first electronic device (100) may determine a screen projection manner of first image data and second image data (S26). The first electronic device (100) synthesizes the first image data and the second image data based on the screen projection manner, to generate synthesized image data (S27), and may output the synthesized image data to a second electronic device (200) by using the screen projection port, to trigger the second electronic device (200) to display synthesized images corresponding to the synthesized image data based on the screen projection manner. By using this method, two pieces of image data may be synthesized into one piece of image data for screen projection onto the second electronic device (200) for presentation, so that richness of content for screen projection is increased, and diversity of screen projection manners is increased.

## Description

This application claims priority to Chinese Patent Application No. 201910350188.5, filed with the China National Intellectual Property Administration on April 28, 2019 and entitled "SCREEN PROJECTION METHOD, ELECTRONIC DEVICE, AND SYSTEM", which is incorporated herein by reference in its entirety.

### TECHNICAL FIELD

This application relates to the field of computer technologies, and in particular, to a screen projection method, an electronic device, and a system.

### BACKGROUND

With development of computer technologies, multi-screen interactive applications are becoming increasingly common. Multi-screen interaction refers to a series of operations such as transmitting, parsing, displaying, and/or controlling multimedia content between different electronic devices by using an IGRS protocol, a Miracast protocol, and the like, and by using a wireless fidelity (Wireless Fidelity, WIFI) network connection. To-be-displayed content can be shared on different electronic devices, to enrich multimedia life of users.

Currently, with emergence of a multi-screen interactive technology, when a user watches video playback on a first electronic device (for example, a mobile phone), because a screen size of the first electronic device is limited, it is not suitable for viewing by a plurality of people. In this case, the user may choose to synchronize a video play picture on the first electronic device to a second electronic device (for example, a television or a notebook computer) for presentation. A screen of the second electronic device may be larger than that of the first electronic device. In this case, the user may exit the video play picture on the first electronic device to perform social interaction, and the first electronic device displays a full-screen social interaction picture. However, if the user wants to both watch the video and perform the social interaction at this time, eyes of the user have to switch back and forth between the screens of the first electronic device and the second electronic device, and user experience is poor.

### SUMMARY

Embodiments of this application provide a screen projection method, an electronic device, and a system, to synthesize two pieces of image data into one piece of image data for screen projection onto a second electronic device for presentation, so that richness of content for screen projection is increased, diversity of screen projection manners is increased, and user experience of screen projection is enhanced.

According to a first aspect, an embodiment of this application provides a screen projection method, where the method includes:

A first electronic device determines a screen projection manner of first image data and second image data when receiving a screen projection indication of a user for first media data and detecting that a screen projection port of the first electronic device outputs screen projection data. The first electronic device synthesizes the first image data and the second image data based on the determined screen projection manner, to generate synthesized image data. The first electronic device outputs the synthesized image data to a second electronic device by using the screen projection port, to trigger the second electronic device to display synthesized images corresponding to the synthesized image data based on the screen projection manner. The first electronic device may be a mobile phone, and the second electronic device may be a television. The screen projection data output by the screen projection port is generated based on second media data, the first media data includes the first image data, and the second media data includes the second image data. Because the screen projection port of the first electronic device is outputting the screen projection data, it indicates that one piece of data in the first electronic device is being subject to screen projection. When the first electronic device receives a screen projection indication for another piece of data, the first electronic device synthesizes the two pieces of data, and performs screen projection on the synthesized data to the second electronic device for display, so that richness of content for screen projection is increased, diversity of screen projection manners is increased, screen projection functions are enriched, and user experience of screen projection is enhanced.

With reference to the first aspect, in a possible implementation, the first electronic device may synthesize a plurality of first image frames and a plurality of second image frames based on the screen projection manner, to obtain a plurality of pieces of synthesized image frame data, and may generate the synthesized image data based on the plurality of pieces of synthesized image frame data. The first image data and the second image data both include one image frame on each time node, the plurality of first image frames are image frames of the first image data on a plurality of consecutive time nodes, and the plurality of second image frames are image frames of the second image data on a plurality of consecutive time nodes. In this application, a segment of image data in the first image data (namely, the plurality of first image frames) and a segment of image data in the second image data (namely, the plurality of second image frames) are synthesized before transmission, that is, data in a same time period is synthesized before transmission, so that transmission efficiency can be improved.

With reference to the first aspect, in a possible implementation, the first electronic device may perform compression coding on the plurality of pieces of synthesized image frame data, and then generate the synthesized image data. In this application, compression coding is performed on the plurality of pieces of synthesized image frame data, so that a data volume during data transmission is reduced, transmission efficiency is improved, and a delay is reduced.

With reference to the first aspect, in a possible implementation, any piece of synthesized image frame data of the plurality of pieces of synthesized image frame data is obtained by synthesizing any first image frame in the plurality of first image frames and a second image frame that corresponds to the first image frame and that is in the plurality of second image frames, and a time node on which the first image frame is located is the same as a time node on which the second image frame corresponding to the first image frame is located. In this application, an image frame of the first image data and an image frame of the second image data that are on a same time node are synthesized, so that the first image data and the second image data can be synchronously presented on the second electronic device.

With reference to the first aspect, in a possible implementation, the screen projection manner includes a picture in picture screen projection manner, and when the first electronic device synthesizes the plurality of first image frames and the plurality of second image frames based on the screen projection manner, to obtain the plurality of pieces of synthesized image frame data, the first electronic device may compress an image corresponding to each first image frame in the plurality of first image frames, and then superimpose a plurality of images corresponding to the plurality of first image frames after compression to a plurality of images corresponding to the plurality of second image frames based on a first relative position corresponding to the picture in picture screen projection manner, to obtain a plurality of synthesized images, and may obtain the plurality of pieces of synthesized image frame data based on image data corresponding to the plurality of synthesized images. It may be understood that, when the first electronic device superposes the plurality of images corresponding to the plurality of first image frames after compression to the plurality of images corresponding to the plurality of second image frames based on the first relative position corresponding to the picture in picture screen projection manner, to obtain the plurality of synthesized images, the first electronic device may perform the following operation for any first image frame i in the plurality of first image frames and any second image frame j in the plurality of second image frames: superimposing an image corresponding to the first image frame i after compression to an image corresponding to the second image frame j based on the first relative position corresponding to the picture in picture screen projection manner, to obtain a synthesized image. The first relative position is used for representing a relative position when images corresponding to two image frames are synthesized into one synthesized image corresponding to the synthesized image frame data in the picture in picture screen projection manner. An image size of the image corresponding to each first image frame after compression is the same as an image size corresponding to the picture in picture screen projection manner. Picture in picture may be understood as superimposing a larger picture and smaller picture together for presentation. In this application, the images corresponding to the first image frames after compression are superimposed to the images corresponding to the second image frames, to obtain the synthesized images, where the synthesized images are in a form of picture in picture. A picture in picture screen projection manner is provided, to increase screen projection manners on the first electronic device.

With reference to the first aspect, in a possible implementation, the screen projection manner includes a tile screen projection manner, and when the first electronic device synthesizes the plurality of first image frames and the plurality of second image frames based on the screen projection manner, to obtain the plurality of pieces of synthesized image frame data, the first electronic device may compress a plurality of images corresponding to the plurality of first image frames and a plurality of images corresponding to the plurality of second image frames based on an image size parameter corresponding to the tile screen projection manner, and may synthesize, based on an image position parameter corresponding to the tile screen projection manner, the plurality of images corresponding to the plurality of first image frames after compression and the plurality of images corresponding to the plurality of second image frames after compression, to obtain a plurality of synthesized images. The first electronic device obtains the plurality of pieces of synthesized image frame data based on image data corresponding to the plurality of synthesized images. The image position parameter is used for representing a relative position when images corresponding to two image frames are synthesized into one synthesized image corresponding to the synthesized image frame data. The tile screen projection manner includes a horizontal tile screen projection manner and a vertical tile screen projection manner. Horizontal tile may be understood as that two pictures are horizontally arranged and do not overlap each other, and vertical tile may be understood as that two pictures are vertically arranged and do not overlap each other. In this application, the images corresponding to the first image frames after compression and the images corresponding to the second image frames after compression are synthesized, to obtain the synthesized images, where the synthesized images are in a form of horizontal tile or vertical tile. A tile screen projection manner is provided, to increase screen projection manners on the first electronic device.

With reference to the first aspect, in a possible implementation, the image size parameter corresponding to the tile screen projection manner includes a first image size and a second image size, and the image position parameter corresponding to the tile screen projection manner includes a second relative position. When synthesizing the plurality of synthesized images, the first electronic device may compress an image corresponding to each first image frame in the plurality of first image frames, and may compress an image corresponding to each first image frame in the plurality of second image frames. The first electronic device may splice the plurality of images corresponding to the plurality of first image frames after compression and the plurality of images corresponding to the plurality of second image frames after compression based on the second relative position, to obtain the plurality of synthesized images. An image size of the image corresponding to each first image frame after compression is the same as the first image size, and an image size of the image corresponding to each second image frame after compression is the same as the second image size. It may be understood that, when the first electronic device splices the plurality of images corresponding to the plurality of first image frames after compression and the plurality of images corresponding to the plurality of second image frames after compression based on the second relative position, to obtain the plurality of synthesized images, the first electronic device may perform the following operation for any first image frame i in the plurality of first image frames and any second image frame j in the plurality of second image frames: splicing an image corresponding to the first image frame i after compression and an image corresponding to the second image frame j after compression based on the second relative position, to obtain a synthesized image. In this application, the images corresponding to the first image frames and the images corresponding to the second image frames are compressed to different degrees before synthesis, implementations of tile screen projection are provided, and diversity of synthesized images is increased.

With reference to the first aspect, in a possible implementation, the second media data further includes audio data. The first electronic device may further output the audio data to the second electronic device by using the screen projection port when outputting the synthesized image data to the second electronic device by using the screen projection port, to trigger the second electronic device to display the synthesized images corresponding to the synthesized image data based on the screen projection manner and play audio corresponding to the audio data. When the second media data includes audio, and when the synthesized image data is subject to screen projection onto the second electronic device for display, the audio data in the second media data is also subject to screen projection onto the second electronic device for play, to ensure integrity of the second media data during screen projection.

With reference to the first aspect, in a possible implementation, when the first electronic device outputs the audio data to the second electronic device by using the screen projection port, the first electronic device may perform compression coding on the audio data, and then output the audio data to the second electronic device by using the screen projection port. In this application, compression coding is performed on the audio data, so that a data volume during data transmission is reduced, and transmission efficiency is improved.

With reference to the first aspect, in a possible implementation, the first media data further includes first audio data, and the second media data further includes second audio data. When the first electronic device synthesizes the first image data and the second image data based on the screen projection manner, to generate the synthesized image data, the first electronic device may synthesize the first audio data and the second audio data, to generate synthesized audio data. The first electronic device may further output the synthesized audio data to the second electronic device by using the screen projection port when outputting the synthesized image data to the second electronic device by using the screen projection port, to trigger the second electronic device to display the synthesized images corresponding to the synthesized image data based on the screen projection manner and play synthesized audio corresponding to the synthesized audio data. When the first media data and the second media data both include audio, the audio data in the first media data and the audio data in the second media data are synthesized to obtain the synthesized audio data. When the synthesized image data is further subject to screen projection onto the second electronic device for display, the synthesized audio data is also subject to screen projection onto the second electronic device for play, to ensure integrity of media data during screen projection.

With reference to the first aspect, in a possible implementation, when the first electronic device synthesizes the first audio data and the second audio data, to generate the synthesized audio data, the first electronic device may replace second audio in the second audio data with first audio in the first audio data, to obtain the synthesized audio, and may perform compression coding on the synthesized audio, and then generate the synthesized audio data. The first audio is audio data of the first audio data in a time period determined by a plurality of consecutive time nodes, and the second audio is audio data of the second audio data in the time period. In this application, one piece of audio data is used to replace another piece of audio data to implement audio synthesis, to alleviate a feeling of noise when two audio are subject to screen projection onto one electronic device for play, thereby further improving user experience.

With reference to the first aspect, in a possible implementation, when the first electronic device determines the screen projection manner of the first image data and the second image data, the first electronic device may output screen projection selection information, where the screen projection selection information is used for prompting a user to select one screen projection manner from a plurality of screen projection manners, to perform screen projection, and the plurality of screen projection manners include a picture in picture screen projection manner, a tile screen projection manner, and/or a coverage screen projection manner. When the user selects a screen projection manner on the first electronic device, the first electronic device determines the screen projection manner of the first image data and the second image data in response to the selection of the user. In this application, a plurality of screen projection manners are provided for selection by a user, so that screen projection manners are more flexible and user-controllable.

With reference to the first aspect, in a possible implementation, the first media data is derived from a social application, and the second media data is derived from audio and video applications.

With reference to the first aspect, in a possible implementation, the screen projection port is a wireless screen projection port, and is configured to establish, by the first electronic device, a wireless screen projection connection with the second electronic device based on a wireless display standard Miracast, to transmit the screen projection data and the synthesized image data.

According to a second aspect, this application provides an electronic device. The electronic device includes units and/or modules configured to perform the screen projection method provided in the first aspect and/or any possible implementation of the first aspect, and therefore can also achieve beneficial effects (or advantages) of the screen projection method provided in the first aspect.

According to a third aspect, this application provides an electronic device, which is used as a first electronic device and includes a processor, an input device, an output device, and a memory, where the memory is configured to store computer programs, the computer programs include program instructions, and when the processor runs the program instructions, the first electronic device is enabled to perform the screen projection method provided in the first aspect.

According to a fourth aspect, this application provides a screen projection system, including the first electronic device provided in the second aspect and a second electronic device. The second electronic device is configured to: receive the synthesized image data output by the first electronic device, and display synthesized images corresponding to the synthesized image data.

According to a fifth aspect, an embodiment of this application provides a computer-readable storage medium, configured to store a computer program request for use by a first electronic device, where the computer program request includes programs used for performing the first aspect.

According to a sixth aspect, this application provides a computer program product including instructions. When the computer program product runs on a computer, the computer is enabled to perform the screen projection method described in the first aspect.

When the embodiments of this application are implemented, two pieces of different image data may be fused into one piece of image data for screen projection onto the second electronic device for presentation, so that richness of content for screen projection is increased, diversity of screen projection manners is increased, screen projection functions are enriched, and user experience of screen projection is enhanced.

### BRIEF DESCRIPTION OF DRAWINGS

To describe the technical solutions of the embodiments of this application more clearly, the following briefly describes the accompanying drawings required for describing the embodiments.
FIG. 1 is a system architectural diagram of a screen projection system according to an embodiment of this application;
FIG. 2 is a schematic structural diagram of a first electronic device according to an embodiment of this application;
FIG. 3 is a block diagram of a software structure of a first electronic device according to an embodiment of this application;
FIG. 4A and FIG. 4B are a schematic flowchart of a screen projection method according to an embodiment of this application;
FIG. 5 is a schematic diagram of a user interface of a first electronic device according to an embodiment of this application;
FIG. 6a, FIG. 6b, and FIG. 6c are schematic diagrams of interface interaction of a first electronic device according to an embodiment of this application;
FIG. 7a, FIG. 7b, and FIG. 7c are schematic diagrams of an interface on which a first electronic device establishes a screen projection connection according to this application;
FIG. 8A and FIG. 8B are schematic diagrams of an interface of a first electronic device and a second electronic device according to an embodiment of this application;
FIG. 9A and FIG. 9B are another schematic flowchart of a screen projection method according to an embodiment of this application;
FIG. 10a, FIG. 10b, FIG. 10c, and FIG. 10d are other schematic diagrams of interface interaction of a first electronic device according to an embodiment of this application;
FIG. 11a is a schematic diagram of synthesizing images according to an embodiment of this application;
FIG. 11b is another schematic diagram of synthesizing images according to an embodiment of this application;
FIG. 11c is still another schematic diagram of synthesizing images according to an embodiment of this application; and
FIG. 12a(1), FIG. 12a(2), FIG. 12b(1), FIG. 12b(2), FIG. 12c(1), and FIG. 12c(2) are other schematic diagrams of an interface of a first electronic device and a second electronic device according to an embodiment of this application.

### DESCRIPTION OF EMBODIMENTS

The following clearly and completely describes the technical solutions in the embodiments of this application with reference to the accompanying drawings in the embodiments of this application.

Screen projection in this application refers to transmitting media data (such as audio, a video, or a picture) on an electronic device to another electronic device for presentation, to synchronously display same media data among a plurality of electronic devices. Screen projection in this application may include wired screen projection and wireless screen projection. In the wired screen projection, a connection among a plurality of electronic devices may be established by using a high definition multimedia interface (high definition multimedia interface, HDMI), and media data is transmitted by using an HDMI transmission line. In the wireless screen projection, a connection among a plurality of electronic devices may be established by using a Miracast protocol, and media data is transmitted by using WIFI.

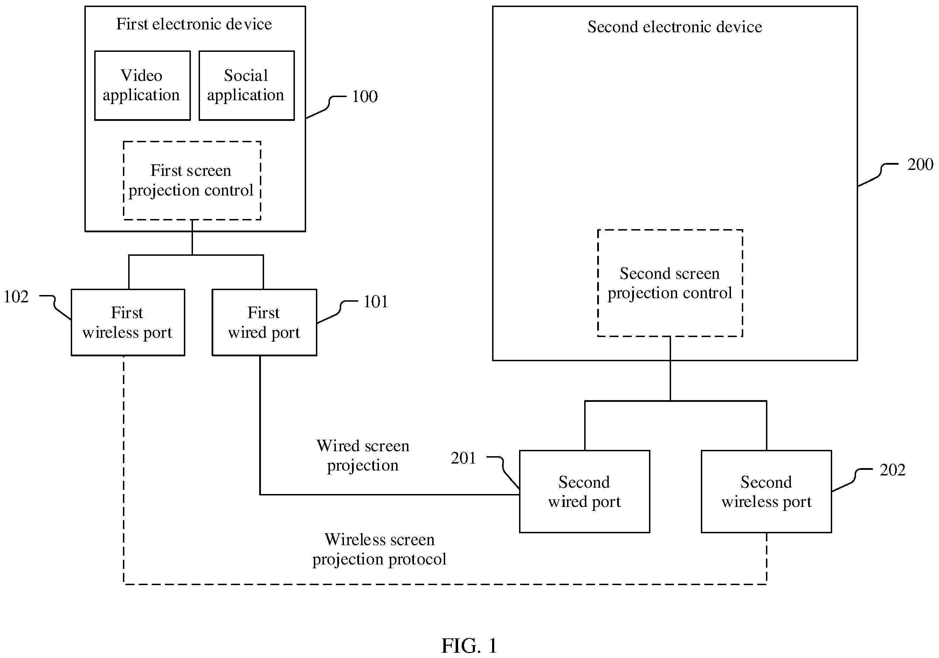

A screen projection system in this application includes at least two electronic devices and one screen projection port. The screen projection port herein may include a wired port and/or a wireless port. The wired port may be an HDMI. The wireless port may be an application programming interface (application programming interface, API), or may be a hardware screen projection module. FIG. 1 is a system architectural diagram of a screen projection system according to an embodiment of this application. As shown in FIG. 1, the screen projection system includes a first electronic device 100, a second electronic device 200, a first wired port 101, a first wireless port 102, a second wired port 201, and a second wireless port 202. The first wired port 101 and the first wireless port 102 may be integrated on the first electronic device 100, or may exist independently of the first electronic device 100. The second wired port 201 and the second wireless port 202 may be integrated on the second electronic device 200, or may exist independently of the second electronic device 200. This is not limited in this embodiment of this application. The first electronic device 100 and the second electronic device 200 may establish a screen projection connection by using a screen projection port. At least a video application and a social application may run on the first electronic device 100, and the first electronic device 100 has at least a source (Source) capability. Optionally, the first electronic device 100 may include a first screen projection control, and the first screen projection control is configured to implement the source (Source) capability. The second electronic device 100 has at least a sink (Sink) capability, an image display capability, and a sound output capability. Optionally, the second electronic device 200 may include a second screen projection control, and the second screen projection control is configured to implement the sink (Sink) capability. An example of the first electronic device 100 includes but is not limited to an electronic device equipped with iOS, android, microsoft, or another operating system. Optionally, the first electronic device 100 may be an electronic device such as a mobile phone, a tablet computer, a personal digital assistant (personal digital assistant, PDA), or a desktop computer. The second electronic device 200 may be an electronic device such as a television, a tablet computer, or a desktop computer. In some feasible implementations, the screen projection system in this application may further include a remote control. The remote control is configured to control play, pause, or the like of second media data (a video) on the second electronic device 200.

In some feasible implementations, a screen projection method in this application may be applied to the first electronic device 100. When receiving a screen projection indication, the first electronic device 100 detects whether a screen projection port of the first electronic device 100 outputs screen projection data. If the screen projection port of the first electronic device 100 outputs the screen projection data, it indicates that screen projection at this time is not the first screen projection performed by the first electronic device 100. Then, the first electronic device 100 may determine a screen projection manner, and may synthesize, based on the screen projection manner, first image data in media data to which the screen projection indication is directed and second image data in media data of the first screen projection, to generate synthesized image data, and send, by using the screen projection port, the synthesized image data to the second electronic device 200 for display. The second electronic device 200 receives the synthesized image data sent by the first electronic device 100, and displays, based on the screen projection manner, synthesized images corresponding to the synthesized image data.

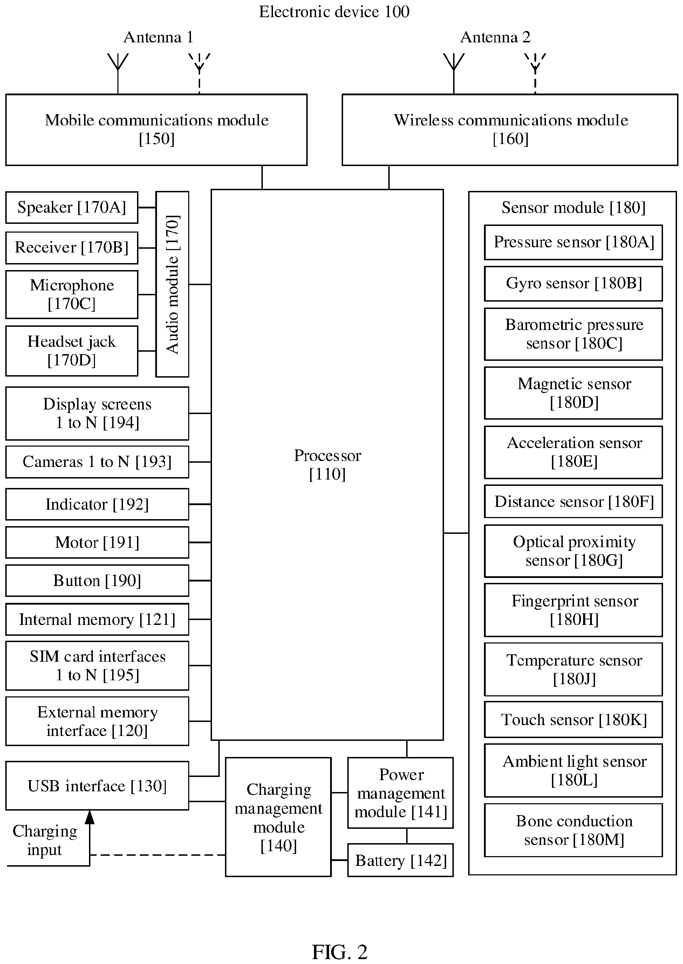

For ease of understanding, the following describes, by using an example, a structure of the first electronic device 100 provided in an embodiment of this application. FIG. 2 is a schematic structural diagram of a first electronic device according to an embodiment of this application.

As shown in FIG. 2, the first electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the first electronic device 100. In some other feasible implementations of this application, the first electronic device 100 may include more or fewer components than those shown in the figure, or combine some components, or split some components, or have different component arrangements. This may be specifically determined based on an actual application scenario, and is not limited herein. The components shown in FIG. 2 may be implemented by using hardware, software, or a combination of software and hardware.

Optionally, the foregoing processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processor (neural-network processing unit, NPU), and the like. Different processing units may be independent devices, or may be integrated into one or more processors.

The controller may be a nerve center and a command center of the first electronic device 100. The controller may generate an operation control signal based on an instruction operation code and a timing signal, to control instruction fetching and instruction execution.

A memory may be further disposed in the processor 110, and is configured to store instructions and data. The instructions stored in the memory are used by the first electronic device 100 to perform a screen projection method in the embodiments of this application. In some feasible implementations of this application, the data stored in the memory may include media data, where the media data may be audio and video data. In some feasible implementations, the memory in the processor 110 is a cache. The memory may store instructions or data that have just been used or recycled by the processor 110. If the processor 110 needs to use the instructions or data again, the processor 110 may directly invoke the instructions or data from the foregoing memory. In this way, repeated access is avoided, and a waiting time of the processor 110 is reduced. Therefore, system efficiency is improved.

In some feasible implementations, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, an interface connection relationship between the modules shown in this embodiment of this application is merely an example for description, and does not constitute a structural limitation on the first electronic device 100. In some other feasible implementations of this application, the first electronic device 100 may alternatively use an interface connection manner different from that in the foregoing embodiment, or a combination of a plurality of interface connection manners.

The charging management module 140 is configured to receive a charging input from a charger to charge the power management module 141 of the first electronic device 100. The charger may be a wireless charger, or may be wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display screen 194, the camera 193, the wireless communications module 160, and the like.

A wireless communication function of the first electronic device 100 may be implemented by using the antenna 1, the antenna 2, the mobile communications module 150, the wireless communications module 160, the modem processor, the baseband processor, and the like.

In some feasible implementations, the first electronic device 100 may communicate with another device by using a wireless communication function. For example, the first electronic device 100 may communicate with a second electronic device 200, the first electronic device 100 establishes a screen projection connection with the second electronic device 200, and the first electronic device 100 outputs screen projection data to the second electronic device 200. The screen projection data output by the first electronic device 100 may be audio and video data. Refer to related descriptions of subsequent embodiments for a process of communication between the first electronic device 100 and the second electronic device 200, and details are not described herein.

The antenna 1 and the antenna 2 are configured to transmit and receive electromagnetic wave signals. Each antenna in the first electronic device 100 may be configured to cover one or more communication bands. Different antennas may also be multiplexed to improve antenna utilization. For example, the antenna 1 may be multiplexed as a diversity antenna of a wireless local area network. In some other feasible implementations, the antenna may be used in combination with a tuning switch.

The mobile communications module 150 may provide a solution applied to the first electronic device 100 for wireless communication such as 2G/3G/4G/5G wireless communication. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering and amplification on the received electromagnetic wave, and transmit the electromagnetic wave to the modem processor for demodulation. The mobile communications module 150 may further amplify a signal modulated by the modem processor, and convert the signal into an electromagnetic wave by using the antenna 1 for radiation. In some feasible implementations, at least some function modules of the mobile communications module 150 may be disposed in the processor 110. In some feasible implementations, at least some function modules of the mobile communications module 150 and at least some modules of the processor 110 may be disposed in a same device.

The modem processor may include a modulator and a demodulator. The modulator is configured to modulate a to-be-sent low frequency baseband signal into a medium-high frequency signal. The demodulator is configured to demodulate a received electromagnetic wave signal into a low frequency baseband signal. Subsequently, the demodulator transmits the low frequency baseband signal obtained through demodulation to the baseband processor for processing. The low frequency baseband signal is transmitted to the application processor after being processed by the baseband processor. The application processor outputs a sound signal by using an audio device (not limited to the speaker 170A, the receiver 170B, or the like), or displays an image or a video by using the display screen 194. In some feasible implementations, the modem processor may be an independent device. In some other feasible implementations, the modem processor may be independent of the processor 110, and disposed in a same device as the mobile communications module 150 or another function module.

The wireless communications module 160 may provide a solution applied to the first electronic device 100 for wireless communication including wireless local area network (wireless local area networks, WLAN), for example, a Wi-Fi network, Bluetooth (blue tooth, BT), global navigation satellite system (global navigation satellite system, GNSS), frequency modulation (frequency modulation, FM), near field communication (near field communication, NFC), and infrared technologies (infrared, IR). The wireless communications module 160 may be one or more devices integrating at least one communication processing module. The wireless communications module 160 receives an electromagnetic wave by using the antenna 2, performs frequency modulation and filtering on the electromagnetic wave signal, and sends a processed signal to the processor 110. The wireless communications module 160 may further receive a to-be-sent signal from the processor 110, perform frequency modulation and amplification on the to-be-sent signal, and convert the signal into an electromagnetic wave by using the antenna 2 for radiation.

In some feasible implementations, in the first electronic device 100, the antenna 1 is coupled to the mobile communications module 150, and the antenna 2 is coupled to the wireless communications module 160, so that the first electronic device 100 can communicate with a network and another device (for example, a second electronic device 200) by using a wireless communications technology. The wireless communications technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR, and/or other technologies. The foregoing GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

The first electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation for graphics rendering. The processor 110 may include one or more GPUs that execute program instructions to generate or change display information.

In some feasible implementations, the GPU may be configured to generate synthesized image data by using two pieces of different image data. For example, the GPU may perform synthesis by using a plurality of first image frames in first image data and second image frames in second image data, to obtain a plurality of pieces of synthesized image frame data, and may further perform compression coding on the plurality of pieces of synthesized image frame data and then generate the synthesized image data. Refer to related descriptions of subsequent embodiments for a process of generating the synthesized image frame data, and details are not described herein.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some feasible implementations, the first electronic device 100 may include one or N display screens 194, where N is a positive integer greater than 1.

In some feasible implementations, the display screen 194 may be configured to display interfaces for output by a system of the first electronic device 100. Refer to related descriptions of subsequent embodiments for the interfaces for output by the first electronic device 100.

The first electronic device 100 may implement a shooting function by using the ISP, the camera 193, the video codec, the GPU, the display screen 194, the application processor, and the like.

The ISP is configured to process data fed back by the camera 193. For example, when photographing is performed, a shutter is opened, light is transferred to a camera photosensitive element by using a lens, an optical signal is converted into an electrical signal, and the camera photosensitive element transfers the electrical signal to the ISP for processing, and the electrical signal is converted into an image visible to naked eyes. The ISP may further perform algorithm optimization on noise, luminance, and a skin color of an image. The ISP may further optimize parameters such as exposure and a color temperature of a shooting scene. In some feasible implementations, the ISP may be disposed in the camera 193.

The camera 193 is configured to capture a still image or a video. An optical image of an object is generated by using the lens, and is projected onto the photosensitive element. The photosensitive element converts the optical signal into an electrical signal, and then transfers the electrical signal to the ISP for conversion into a digital image signal. The ISP outputs the digital image signal to the DSP for processing. The DSP converts the digital image signal into an image signal in a standard format such as RGB or YUV. In some feasible implementations, the first electronic device 100 may include one or N cameras 193, where N is a positive integer greater than 1. In some feasible implementations, the camera 193 is configured to obtain a real image of a user.

The digital signal processor DSP is configured to process a digital signal, and may process another digital signal in addition to a digital image signal.

The video codec is used to compress or decompress a digital video. The first electronic device 100 may support one or more video codecs. In this way, the first electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, facial recognition, speech recognition, or text understanding of the first electronic device 100 may be implemented by using the NPU.

The external memory interface 120 may be configured to connect to an external memory card, for example, a Micro SD card, to expand a storage capability of the first electronic device 100. The external memory card communicates with the processor 110 by using the external memory interface 120, to implement a data storage function. For example, a file such as music or a video is stored in the external memory card.

The internal memory 121 may be configured to store computer-executable program code, where the executable program code includes instructions. The processor 110 executes various function applications and data processing of the first electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (for example, audio data and an address book) and the like created in a process of using the first electronic device 100. In addition, the internal memory 121 may include a high-speed random access memory, and may further include a non-volatile memory, for example, at least one disk storage device, a flash storage device, and a universal flash memory (universal flash storage, UFS).

The first electronic device 100 may implement an audio function such as music play or recording by using the audio module 170, the speaker 170A, the receiver 170B, the microphone 170C, the headset jack 170D, the application processor, and the like. In some feasible implementations, the audio module 170 may be configured to play a sound corresponding to a video. For example, when the display screen 194 displays a video play picture, the audio module 170 outputs a video play sound.

The audio module 170 is configured to convert digital audio information into an analog audio signal output, and is also configured to convert an analog audio input into a digital audio signal.

The speaker 170A, also referred to as a "horn", is configured to convert an audio electrical signal into a sound signal.

The receiver 170B, also referred to as an "earpiece", is configured to convert an audio electrical signal into a sound signal.

The microphone 170C, also referred to as a "mike" or a "MIC", is configured to convert a sound signal into an electrical signal.

The headset jack 170D is configured to connect to a wired headset. The headset interface 170D may be a USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some feasible implementations, the pressure sensor 180A may be disposed on the display screen 194. The gyro sensor 180B may be configured to determine a motion posture of the first electronic device 100. The barometric pressure sensor 180C is configured to measure barometric pressure.

The acceleration sensor 180E may detect magnitudes of accelerations of the electronic device 100 in various directions (generally three axes).

The distance sensor 180F is configured to measure a distance.

The ambient light sensor 180L is configured to sense ambient luminance.

The fingerprint sensor 180H is configured to acquire a fingerprint.

The temperature sensor 180J is configured to detect a temperature

The touch sensor 180K is also referred to as a "touch panel". The touch sensor 180K may be disposed on the display screen 194. A touchscreen includes the touch sensor 180K and the display screen 194, and is also referred to as a "touch screen". The touch sensor 180K is configured to detect a touch operation acting on or near the touch sensor 180K. The touch sensor may transfer the detected touch operation to the application processor, to determine a touch event type. A visual output related to the touch operation may be provided by using the display screen 194. In some other feasible implementations, the touch sensor 180K may alternatively be disposed on a surface of the first electronic device 100, and at a location different from that of the display screen 194.

The key 190 includes a power key, a volume key, or the like. The key 190 may be a mechanical key, or may be a touch key.

The motor 191 may generate a vibration prompt.

The indicator 192 may be an indicator light, and may be configured to indicate a charging status and a battery level change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with and separation from the first electronic device 100. In some feasible implementations, the first electronic device 100 uses eSIM, namely, an embedded SIM card. The eSIM card may be embedded in the first electronic device 100, and cannot be separated from the first electronic device 100.

A software system of the first electronic device 100 may use a layered architecture, an event-driven architecture, a microkernel architecture, a microservice architecture, or a cloud architecture. In an embodiment of this application, a software structure of the first electronic device 100 is described by using an Android system with a layered architecture as an example.

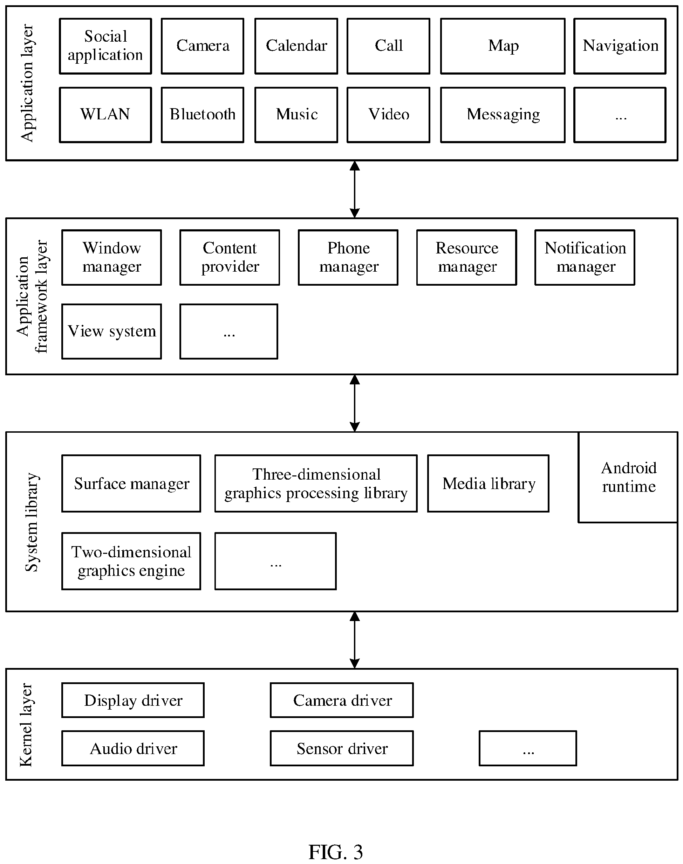

FIG. 3 is a block diagram of a software structure of a first electronic device according to an embodiment of this application.

As shown in FIG. 3, a layered architecture divides software into several layers, each with a clear role and division of labor. The layers communicate with each other by using software interfaces. In some feasible implementations, an Android system may be divided into four layers, which are respectively an application layer, an application framework layer, an Android runtime (Android runtime) and a system library, and a kernel layer from top to bottom.

The application layer may include a series of application packages.

As shown in FIG. 3, the application package may include social applications (applications used for video, voice, and text chats) and applications (which may alternatively be referred to as application programs) such as camera, calendar, call, map, navigation, WLAN, Bluetooth, music, video, and short message service message.

The application framework layer provides an application programming interface and a programming framework for an application of the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display screen, determine whether there is a status bar, lock the screen, capture the screen, and the like.

The content provider is configured to: store and obtain data and make the data accessible to an application. The data may include a video, an image, audio, calls made and answered, a browse history and a bookmark, an address book, and the like.

The view system includes a visual control, for example, a control for displaying a text or a control for displaying a picture. The view system may be configured to build an application. The display interface may include one or more views. For example, a display interface including a short message service message notification icon may include a view that displays texts and a view that displays pictures.

The phone manager is configured to provide a communication function of the first electronic device 100, for example, call status management (including call connection and disconnection, and the like).

The resource manager provides various resources for an application, such as a localized string, an icon, a picture, a layout file, and a video file.

The notification manager enables an application to display, in the status bar, notification information, which can be used for conveying a notification-type message that can automatically disappear after a short stay without user interaction. For example, the notification manager is configured to: notify download completion, and remind a message, and the like. The notification manager may alternatively be a notification that appears in a status bar on top of the system in a form of a chart or scroll bar texts, for example, a notification of an application running in the background, or a notification that appears on the screen in a form of a dialog interface. For example, text information is prompted in the status bar, a prompt tone is issued, an electronic device vibrates, or an indicator light flashes.

The Android Runtime includes a core library and a virtual machine. The Android runtime is responsible for scheduling and managing the Android system.

The core library includes two parts: one is a performance function that a java language needs to invoke, and the other is a core library of Android.

The application layer and the application framework layer run in the virtual machine. The virtual machine executes java files of the application layer and application framework layer as binary files. The virtual machine is configured to execute functions such as object life cycle management, stack management, thread management, security and exception management, and garbage collection.

The system library may include a plurality of function modules, for example, a surface manager (surface manager), a media library (Media Libraries), a three-dimensional graphics processing library (for example, an OpenGL ES), a 2D graphics engine (for example, an SGL), and the like.

The surface manager is configured to manage a display subsystem, and provides a fusion of 2D and 3D layers for a plurality of applications.

The media library supports playback and recording of a plurality of common audio and video formats, a still image file, and the like. The media library may support a plurality of audio and video encoding formats, such as: MPEG4, H.264, MP3, AAC, AMR, JPG, and PNG.

The three-dimensional graphics processing library is configured to implement three-dimensional graphics drawing, image rendering and synthesis, layer processing, and the like. In some feasible implementations, the three-dimensional graphics processing library may be configured to generate a synthesized image. For example, the three-dimensional graphics processing library may perform synthesis by using images corresponding to the plurality of first image frames in the first image data and images corresponding to the plurality of second image frames in the second image data, to obtain a plurality of synthesized images.

The 2D graphics engine is a drawing engine for 2D drawing.

The kernel layer is a layer between hardware and software. The kernel layer includes at least a display driver, a camera driver, an audio driver, and a sensor driver.

The screen projection method provided in the embodiments of this application is applicable to a multi-screen interaction scenario in which a plurality of electronic devices cooperate with each other. In the following embodiments, the screen projection method provided in the embodiments of this application is described by using an example in which the first electronic device 100 is a mobile phone and the second electronic device 200 is a television.

### Embodiment 1:

In this embodiment of this application, a plurality of applications, for example, a video application and a social application, may be installed in the first electronic device 100. The video application may be used to watch a video, a live stream, a novel, a comic, and/or the like, and the social application may be used to perform a video chat, a voice chat, a text chat, and/or the like. The video application and the social application have at least a source function and/or a screen split function. The video application and the social application may be pre-installed when the first electronic device 100 is delivered from factory, or may be installed after being downloaded by a user. The video application may be a video application (application, APP) developed by a vendor of the first electronic device 100, or may be a video APP developed by a third-party vendor. The social application may be a social APP developed by a vendor of the first electronic device 100, or may be a social APP developed by a third-party vendor. For ease of understanding, the following uses a video APP and a social APP as an example for description.

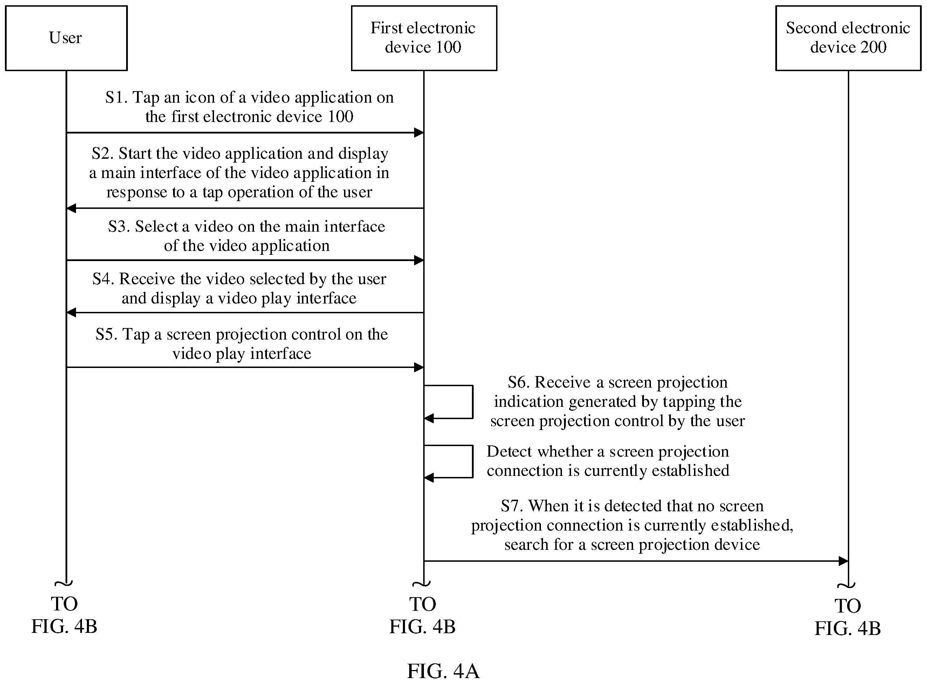

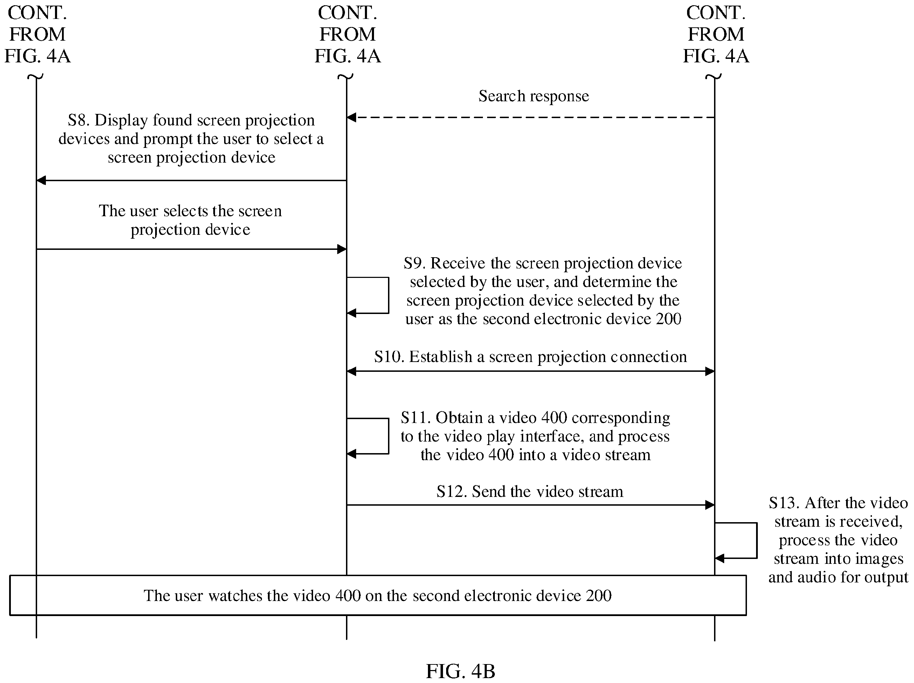

In this embodiment of this application, the first electronic device 100 may perform screen projection on content in any one of the foregoing applications (for example, a video APP) onto the second electronic device 200 for display, to implement multi-screen interaction between the first electronic device 100 and the second electronic device 200, and may simultaneously share to-be-displayed content on different platforms or devices, to enrich multimedia life of users. FIG. 4A and FIG. 4B are a schematic flowchart of a screen projection method according to an embodiment of this application, and shows screen projection interaction between a first electronic device 100 and a second electronic device 200 and a process of processing internal data of the first electronic device 100. The screen projection method provided in this embodiment of this application may include the following steps.

S1. A user taps an icon of a video APP on the first electronic device 100.

S2. The first electronic device 100 starts the video APP and displays a main interface of the video APP in response to a tap operation of the user.

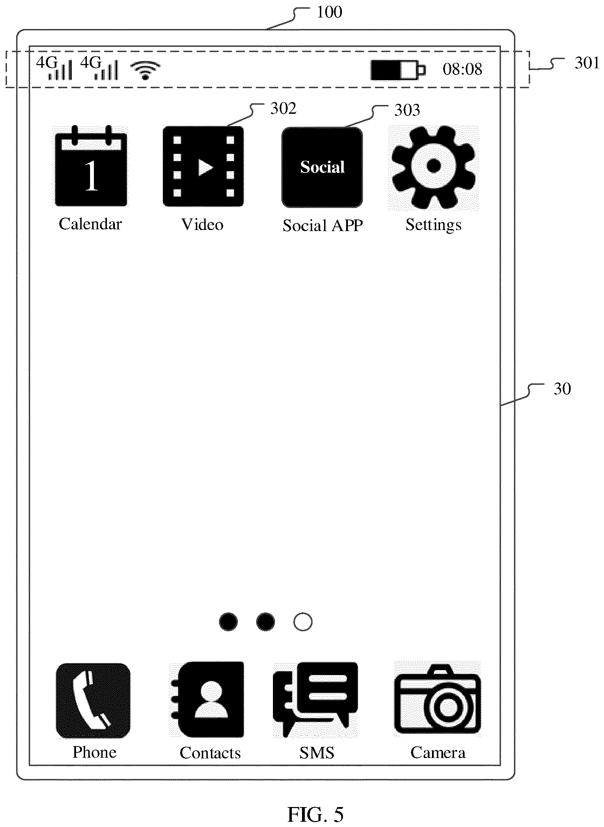

For example, FIG. 5 is a schematic diagram of a user interface of a first electronic device according to an embodiment of this application. FIG. 5 shows a user interface 30 displayed on a touchscreen of the first electronic device 100. The user interface 30 may include a status bar 301, and icons of a plurality of applications, for example, an icon 302 of a video APP, and an icon 303 of a social APP The status bar 301 may include a Wi-Fi icon, a signal strength, a current remaining battery level, a current time, and/or the like. In some feasible implementations, the status bar 301 may further include a Bluetooth icon, an alarm icon, and the like. After detecting a tap event of a finger or a stylus of the user for an application icon, the first electronic device 100 starts an application in response to the tap event, and displays a user interface corresponding to the application icon. For example, when the first electronic device 100 detects that the finger of the user touches the icon 302 of the video APP, the first electronic device 100 starts the video APP in response to the touch event, and displays the main interface of the video APP.

S3. The user selects a video on the main interface of the video APP.

S4. The first electronic device 100 receives the video selected by the user and displays a video play interface.

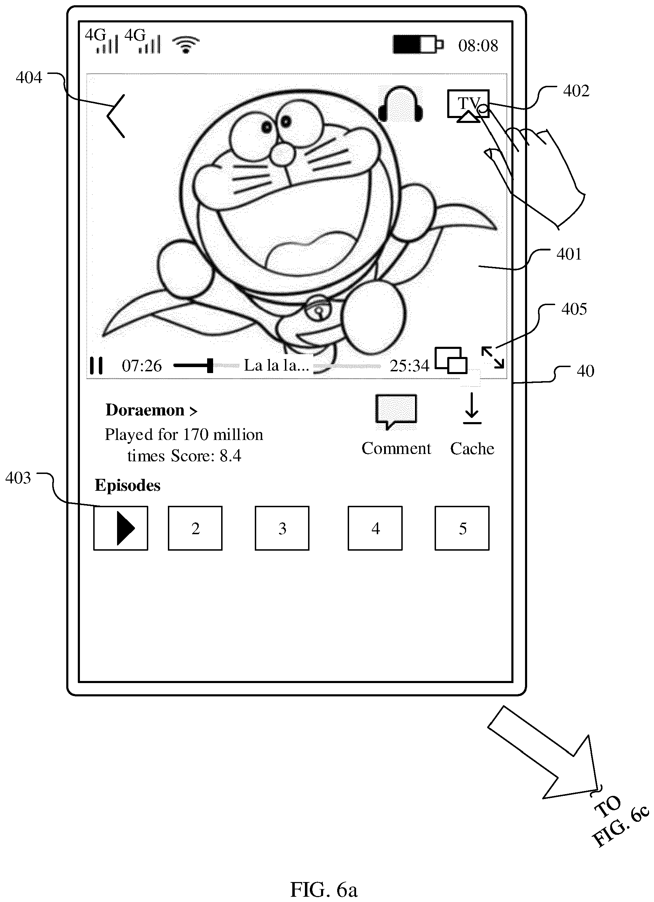

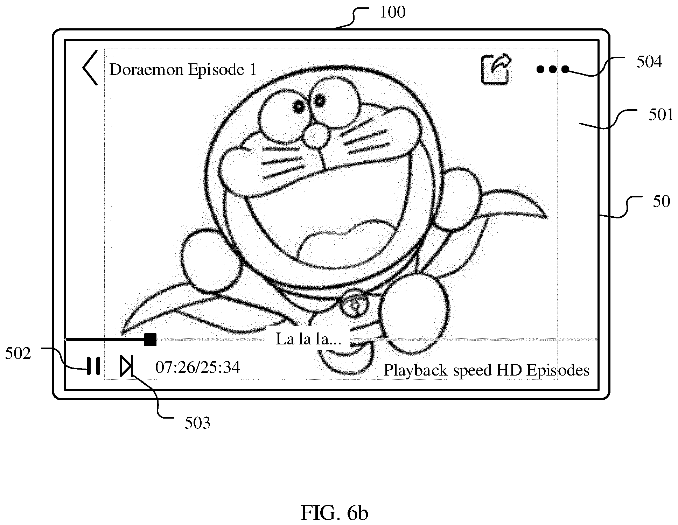

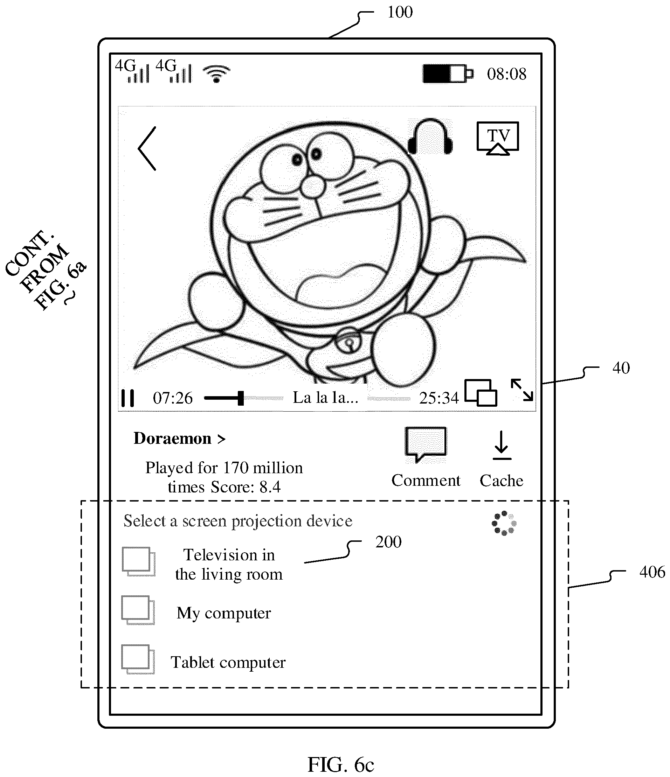

In some feasible implementations, after the first electronic device 100 starts the video APP, the user may search for or select, on the main interface of the video APP, a video that the user wants to play. The first electronic device 100 searches a cloud platform for a video name entered by the user in a search bar, and displays an icon of the found video. After selecting the video that the user wants to play, the user may tap the icon of the video, to enter a video play interface. The video APP of the first electronic device 100 obtains, from the cloud platform, a resource (such as a video stream) of the video selected by the user, and parses the resource, and outputs a video image of the video. FIG. 6a, FIG. 6b, and FIG. 6c are schematic diagrams of interface interaction of a first electronic device according to an embodiment of this application. For example, the video selected by the user is the first episode of "Doraemon", and a corresponding video play interface 40 may be shown in FIG. 6a. The first episode of the video "Doraemon" selected by the user is second media data. For ease of description, the video selected by the user is referred to as a video 400 in the following description.

As shown in FIG. 6a, the video play interface 40 may include a video image 401, a screen projection control 402, episode selection 403, a back control 404, a full-screen control 405, and the like. When the first electronic device 100 detects that the user taps the full-screen control 405, the first electronic device 100 displays a full-screen play interface 50 shown in FIG. 6b. As shown in FIG. 6b, the full-screen play interface 50 includes a video image 501, a pause/play control 502, a switch-to-next-episode control 503, more controls 504, and the like.

In addition to the foregoing elements and controls, the video play interface 40 may further include more content, for example, may further include a cache control and a comment control. The user may download the video 400 by touching the cache control on the video play interface 40 by using a finger. Alternatively, the user may touch the comment control on the video play interface 40 by using a finger, to view a comment, make a comment, or the like. It may be understood that, FIG. 6a and FIG. 6b are merely examples. Elements and controls included in video play interfaces and full-screen play interfaces corresponding to different video APPs or different videos, and arrangement manners of the elements and the controls may be different. This is not limited herein.

S5. The user taps the screen projection control on the video play interface.

S6. The first electronic device 100 receives a screen projection indication generated by tapping the screen projection control by the user.

In some feasible implementations, if the user wants to perform screen projection on the video 400 onto the second electronic device 200 for playing, the user may tap the screen projection control 402 on the video play interface 40 by using a finger or a stylus. The first electronic device 100 receives the screen projection indication generated by tapping the screen projection control 402 by the user. After the first electronic device 100 receives the screen projection request, the first electronic device 100 detects whether the first electronic device 100 has currently established a screen projection connection. It may be understood that the screen projection indication generated by tapping the screen projection control by the user may be a screen projection request, or may be a screen projection instruction. In some feasible implementations, if the user wants to perform screen projection on the video 400 onto the second electronic device 200 for playing, the user may alternatively tap the more controls 504 on the full-screen play interface 50 by using a finger or a stylus, and tap the screen projection control in the more controls 504, to implement screen projection playing of the video 400.

S7. When the first electronic device 100 detects that no screen projection connection is currently established, the first electronic device 100 searches for a screen projection device.

S8. The first electronic device 100 displays found screen projection devices and prompts the user to select a screen projection device.

S9. The first electronic device 100 receives the screen projection device selected by the user, and determines the screen projection device selected by the user as the second electronic device 200.

S10. The first electronic device 100 establishes a screen projection connection with the second electronic device 200.

In some feasible implementations, when the first electronic device 100 detects that no screen projection connection is currently established, the first electronic device 100 searches, by using a wireless network, for one or more screen projection devices connected to the wireless network. The screen projection device in this embodiment of this application is an electronic device having a source (Source)/sink (Sink) capability. When the first electronic device 100 finds one or more screen projection devices, the first electronic device 100 displays, on the video play interface 40, a search box of the screen projection connection. As shown in FIG. 6c, a search/selection box 406 of the screen projection connection includes names of the found one or more screen projection devices. For example, the search/selection box 406 includes the names of the found devices that have the sink capability: a television in a living room, my computer, a tablet computer, and the like. After the user selects the screen projection device, the first electronic device 100 establishes, by using a wireless display standard Miracast protocol in a wireless video display (Wi-Fi display, WFD) technology, a screen projection connection with the device selected by the user. For example, if the screen projection device selected by the user is the television in the living room, the first electronic device 100 establishes a screen projection connection with the television in the living room. For ease of description, the screen projection device selected by the user is referred to as the second electronic device 200 in the following description.

Optionally, in some feasible implementations, after the user taps the screen projection control 402 on the video play interface 40, the first electronic device 100 detects whether a screen projection connection has been currently established. If the first electronic device 100 detects that a screen projection connection has been currently established, based on the screen projection method shown in FIG. 4A and FIG. 4B, step S11 is performed after step S6. To be specific, after receiving the screen projection indication, the first electronic device 100 may obtain the video 400 corresponding to the video play interface, and process the video 400 into a video stream.

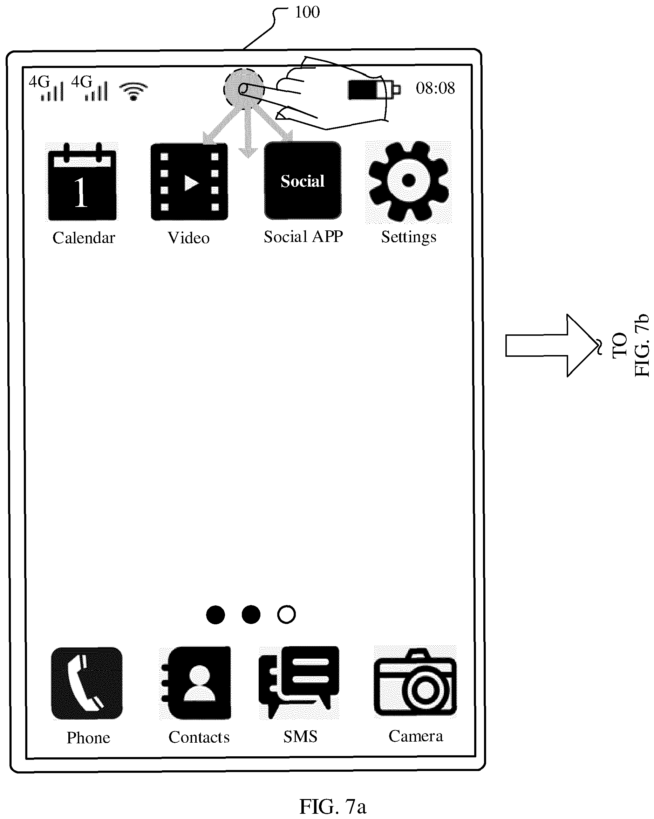

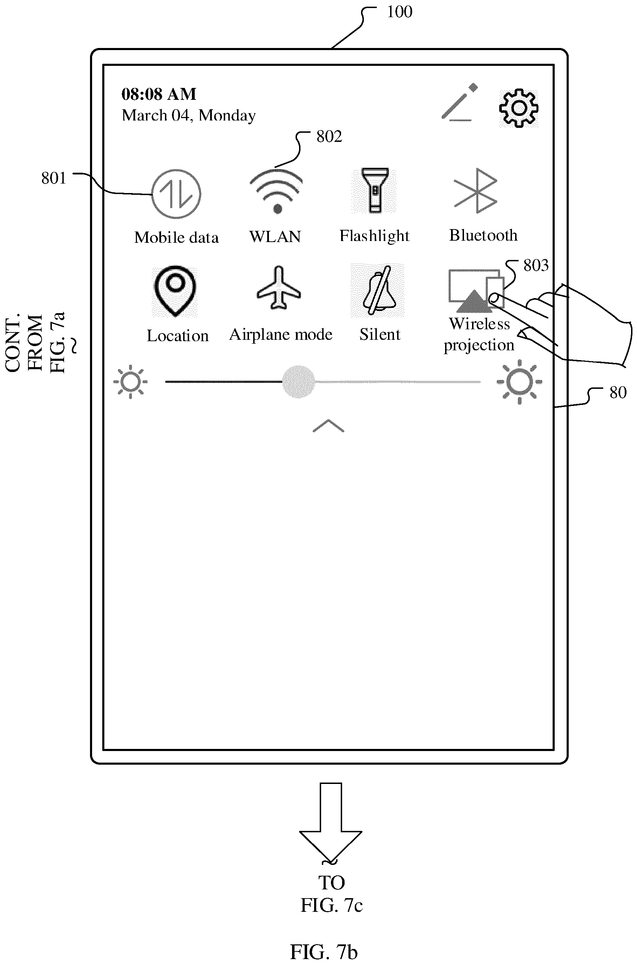

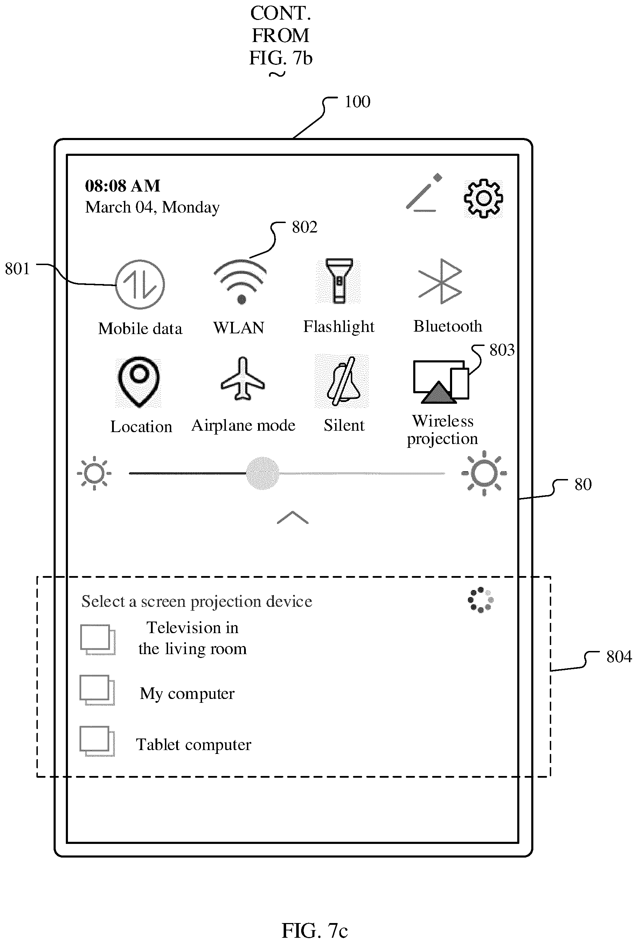

In some feasible implementations, before the user taps the screen projection control 402 on the video play interface 40, the user has triggered the first electronic device 100 to establish a screen projection connection with the second electronic device 200. FIG. 7a, FIG. 7b, and FIG. 7c are schematic diagrams of an interface on which a first electronic device establishes a screen projection connection according to this application. As shown in FIG. 7a, a finger of the user slides downward on a main interface of the first electronic device 100. When detecting a slide-down operation on the main interface, the first electronic device 100 displays a notification management interface 80 shown in FIG. 7b. As shown in FIG. 7b, the notification management interface 80 includes a mobile data icon 801, a wireless network icon 802, a wireless screen projection icon 803, and the like. The user taps the wireless screen projection icon 803 on the notification management interface 80, and the first electronic device 100 enables a wireless screen projection function. In some feasible implementations, if a wireless network is not enabled when the user taps the wireless screen projection icon 803 on the notification management interface 80, the first electronic device 100 prompts to enable or automatically enables the wireless network, and prompts the user to select a wireless network connection. The first electronic device 100 automatically searches, by using WIFI, for a screen projection device (indicating an electronic device having the source/sink capability) connected to the WIFI. The first electronic device 100 displays, on the notification management interface 80, a search/selection box 804 shown in FIG. 7c, where the search/selection box 804 includes names of the found one or more screen projection devices, to prompt the user to select a screen projection device from the found screen projection devices, to establish a screen projection connection. After the user selects the screen projection device, the first electronic device 100 establishes a screen projection connection with the screen projection device selected by the user. In some other feasible implementations, the user may alternatively enable the wireless screen projection function of the first electronic device 100 by setting an icon on the main interface of the first electronic device 100. In some other feasible implementations, the user may establish a wired screen projection connection between the first electronic device 100 and the second electronic device 200 by using an HDMI.

In some feasible implementations, after the first electronic device 100 establishes the screen projection connection with the second electronic device 200, the second electronic device 200 may return a screen projection connection response. In a process in which the first electronic device 100 establishes the screen projection connection with the second electronic device 200, the first electronic device 100 performs performance parameter exchange and negotiation with the second electronic device 200. To be specific, the first electronic device 100 may obtain an image size parameter on the second electronic device 200, a parameter related to a data format that can be received by the second electronic device 200, and the like.

S11. The first electronic device 100 obtains the video 400 corresponding to the video play interface, and processes the video 400 into a video stream.

In some feasible implementations, the first electronic device 100 obtains image data of the video 400. For ease of description, in this embodiment of this application, the video 400 may be used as the second media data, the image data in the video 400 may be used as second image data, and image frames in the image data of the video 400 may be used as second image frames for description. The first electronic device 100 compresses an image corresponding to each image frame in the image data of the video 400, where an image size of the image corresponding to each image frame after compression is the same as an image size on the second electronic device 200. For example, when the image size is in units of pixels, assuming that the image size on the second electronic device 200 is 400x800 pixels, and the image size of the image corresponding to each image frame is 800×800 pixels, when compressing the image corresponding to each image frame, the first electronic device 100 may compress the image size: 800×800 pixels, of the image corresponding to each image frame to 400×800 pixels, to obtain the image corresponding to each image frame after compression. The first electronic device 100 may perform video compression coding on images corresponding to a plurality of image frames after compression to obtain a video stream. The plurality of image frames may be image frames of the image data of the video 400 on a plurality of consecutive time nodes, where the image data of the video 400 has one image frame on one time node. In some other feasible implementations, after obtaining the image data of the video 400, the first electronic device 100 may directly perform video compression coding on the plurality of image frames of the image data on the plurality of consecutive time nodes to obtain a video stream.

In some feasible implementations, the first electronic device 100 obtains audio data of the video 400 in a time period, where the time period is determined by the foregoing plurality of consecutive time nodes. The first electronic device 100 performs audio compression coding, such as advanced audio coding (advanced audio coding, AAC), on the audio data in this time period. The first electronic device mixes the plurality of image frames after video compression coding and the audio data in this time period after audio compression coding into a video stream. A data format of the video stream is any data format that can be received by the second electronic device 200, for example, a video stream in an MP4 (MPEG-4 part 14) format. Images and audio corresponding to the video stream are synchronously presented on the second electronic device 200.

S12. The first electronic device 100 sends the video stream to the second electronic device 200.

S13. After receiving the video stream, the second electronic device 200 processes the video stream into images and audio for output.

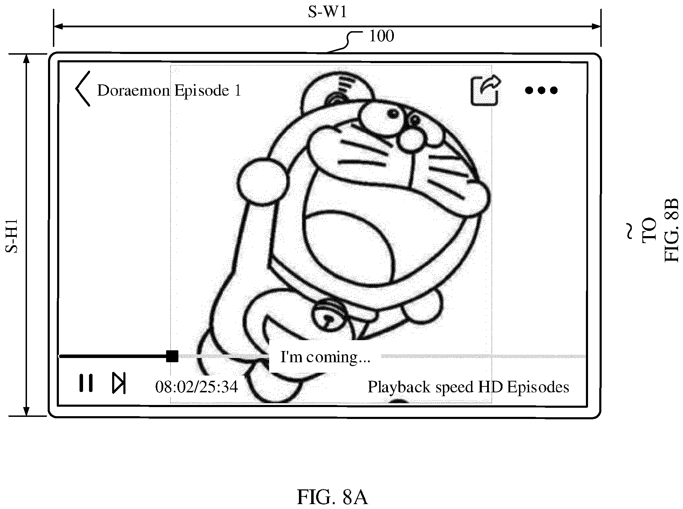

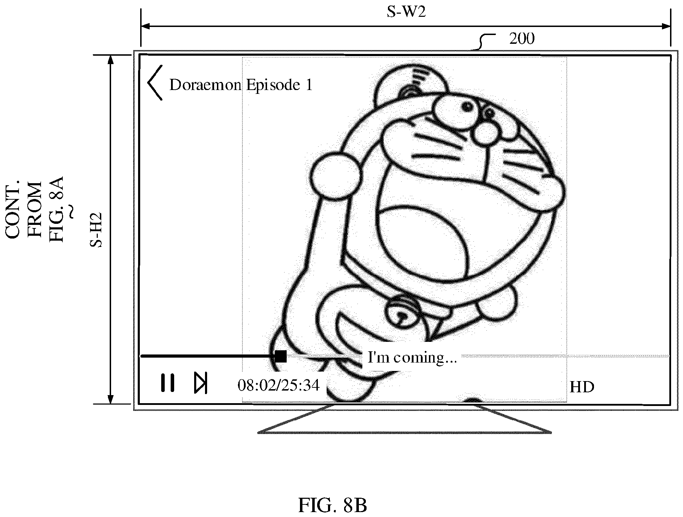

In some feasible implementations, the first electronic device 100 may use the video stream as screen projection data for outputting to the second electronic device 200 by using a video streaming media protocol (for example, a real time streaming protocol (real time streaming protocol, RTSP)) bearer through the screen projection port. The second electronic device 200 performs video streaming media protocol receiving processing and video and audio decoding processing on the screen projection data, and then renders and outputs the screen projection data. In this case, the second electronic device 200 displays the images corresponding to the screen projection data in full screen and/or plays the audio corresponding to the screen projection data. FIG. 8A and FIG. 8B are schematic diagrams of an interface of a first electronic device and a second electronic device according to an embodiment of this application. In FIG. 8A and FIG. 8B, a screen width of the first electronic device 100 is S-W1, and a screen height of the first electronic device 100 is S-H1; a screen width of the second electronic device 100 is S-W2, and a screen height of the second electronic device 200 is S-H2. When displaying an image corresponding to the screen projection data, the second electronic device 200 may adjust an aspect ratio of the image corresponding to the screen projection data to be the same as a screen aspect ratio S-W2: S-H2 of the second electronic device 200, and then display the image. Assuming that the video 400 is played in full screen on the first electronic device 100 without a black or white border, and that a screen aspect ratio S-W1: S-H1 of the first electronic device 100 is the same as the screen aspect ratio S-W2: S-H2 of the second electronic device 200, in this case, a video play picture displayed by the second electronic device 200 shown in FIG. 8A and FIG. 8B also has no black border or white border, and the first electronic device 100 and the second electronic device 200 display a same image and play same audio.

In some feasible implementations, after the first electronic device 100 performs screen projection on the video 400 onto the second electronic device 200 for presentation, the user may control, by using a remote control of the second electronic device 200, playing of the video 400 on the second electronic device 200. For example, if the user presses a pause key on the remote control of the second electronic device 200, the second electronic device 200 sends a play pause instruction to the first electronic device 100. When receiving the play pause instruction, the first electronic device 100 pauses playing of the video 400 on the first electronic device 100. In addition, the first electronic device 100 pauses transmission of the video stream of the video 400, and the second electronic device 200 also pauses playing because no video stream is transmitted to the second electronic device 200. If the user presses a play key on the remote control of the second electronic device 200, the second electronic device 200 sends a play continuation instruction to the first electronic device 100. When the first electronic device 100 receives the play continuation instruction, the first electronic device 100 starts to continue playing from a current play progress of the video 400, and the first electronic device 100 continues transmitting the video stream of the video 400. Therefore, the second electronic device 200 also continues playing after receiving the video stream. Because the video stream is transmitted by segments, each time the first electronic device 100 transmits the video stream, only a video stream in a fixed time period is transmitted. For example, if play duration of the video 400 is 25 minutes and 34 seconds, and the first electronic device 100 may transmit a 10-second video stream each time, the video 400 needs to be transmitted for 154 times before being entirely transmitted to the second electronic device 200.

In some feasible implementations, when the user taps the screen projection control 402 on the video play interface 40 again, the first electronic device 100 exits screen projection of the video 400, that is, the first electronic device 100 terminates outputting the video stream of the video 400. In this case, the screen projection connection between the first electronic device 100 and the second electronic device 200 is not broken. In some other feasible implementations, when the user taps the screen projection control 402 on the video play interface 40 again, the first electronic device 100 breaks the screen projection connection to the second electronic device 200.

In this embodiment of this application, after the user triggers the first electronic device 100 to perform screen projection on content (the video 400) in the video APP onto the second electronic device 200 for display, the user may control, by using the remote control of the second electronic device 200, content to be displayed on the second electronic device. In this way, not only the to-be-displayed content can be shared on different platforms or devices simultaneously, to enrich multimedia life of users, and but also to-be-displayed content can be controlled more flexibly.

### Embodiment 2:

In this embodiment of this application, a user triggers a first electronic device to perform screen projection on a video play picture on the first electronic device onto a second electronic device for watching, in this case, the user may exit the video play picture on the first electronic device, and open another application on the first electronic device to perform another operation, for example, open a social APP to perform a social interaction operation.

For example, in this case, the user opens the social APP on the first electronic device 100 (such as a mobile phone) to perform a video chat with a family member, or in this case, the family member of the user sends a video or voice chat request to the first electronic device 100 of the user by using an electronic device such as a mobile phone, a tablet computer, or a notebook computer. Because the user does not exit the video APP on the first electronic device 100, the video APP still runs. In addition, screen projection of a video 400 is still performed in the background of the first electronic device 100. Therefore, even if the user opens the social APP on the first electronic device 100 to perform a video chat, the second electronic device 200 may also continue to display a video play picture. When the user performs a full-screen video chat with a family member by using the first electronic device 100, because a screen size of the first electronic device 100 is limited, and is not suitable for viewing by a plurality of people at the same time, the user needs to project a video chat picture onto a large-screen electronic device (such as the second electronic device 200) for presentation, so that family members of the user can view situations of the family member on the other side of the video chat. However, a current social APP cannot implement screen projection on the first electronic device 100, and the first electronic device 100 does not support a plurality of screen projection operations.

Therefore, according to a screen projection method provided in this embodiment of this application, a plurality of screen projection operations can be implemented on the first electronic device 100, and synthesized images of video images in a video application and social images in a social application can be subject to screen projection onto the second electronic device 200 for presentation, so that richness of content for screen projection is increased, diversity of screen projection manners is increased, screen projection functions are enriched, and user experience of screen projection is enhanced.

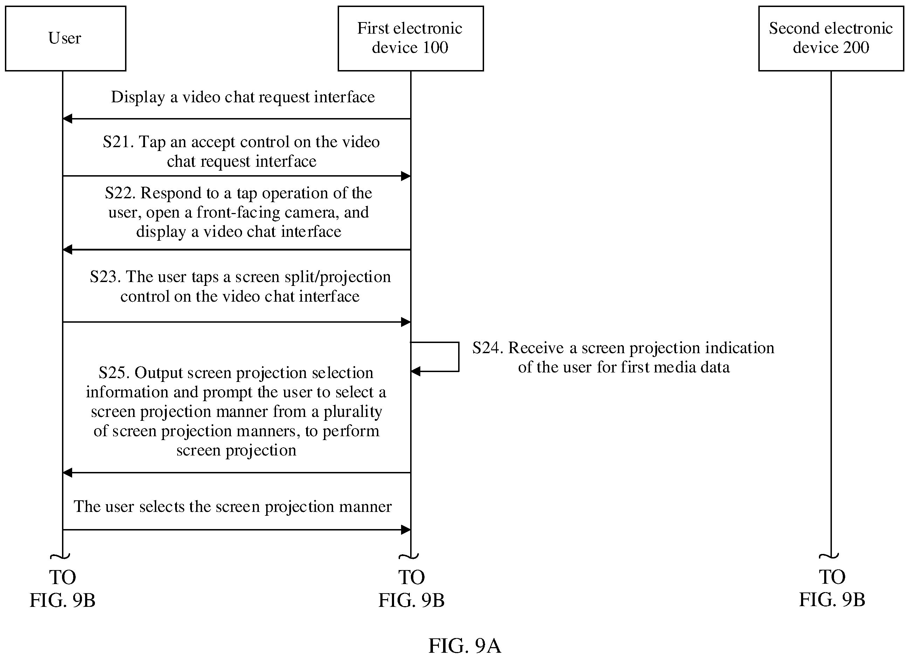

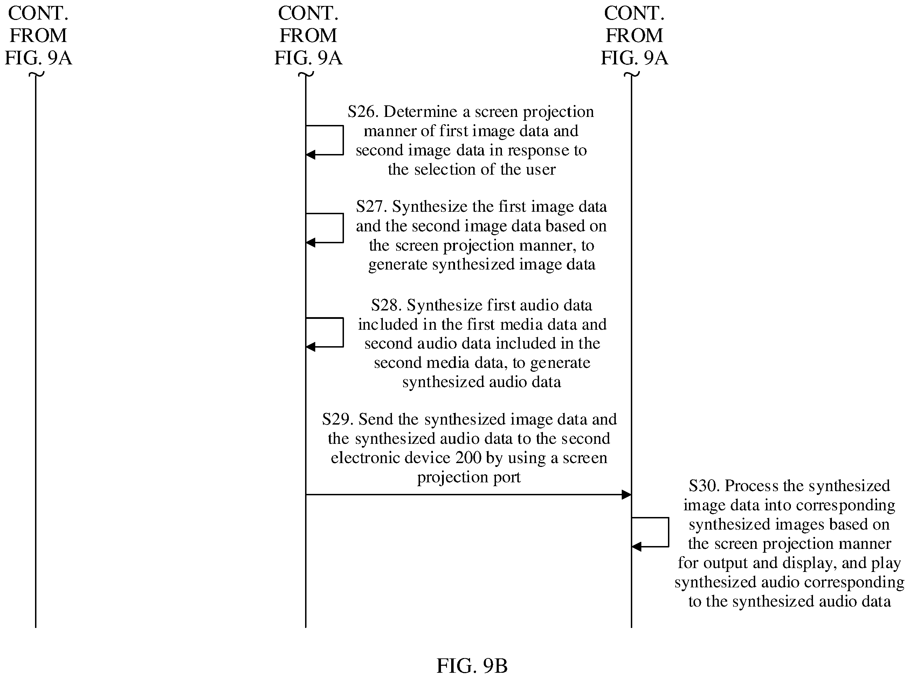

FIG. 9A and FIG. 9B are another schematic flowchart of a screen projection method according to an embodiment of this application.

S21. The user taps an answer control on a video chat request interface.

S22. The first electronic device 100 responds to a tap operation of the user, opens a front-facing camera, and displays a video chat interface.

In some feasible implementations, after the first electronic device 100 performs screen projection on the video 400 onto the second electronic device 200 for presentation, it is assumed that a family member of the user sends a video chat request to the first electronic device 100 of the user at this time. When the first electronic device 100 receives the video chat request, if the user does not exit a video play interface 40 or a full-screen play interface 50 at this time, the first electronic device 100 automatically exits the video play interface 40 or the full-screen play interface 50, and then displays the video chat request interface in full screen.

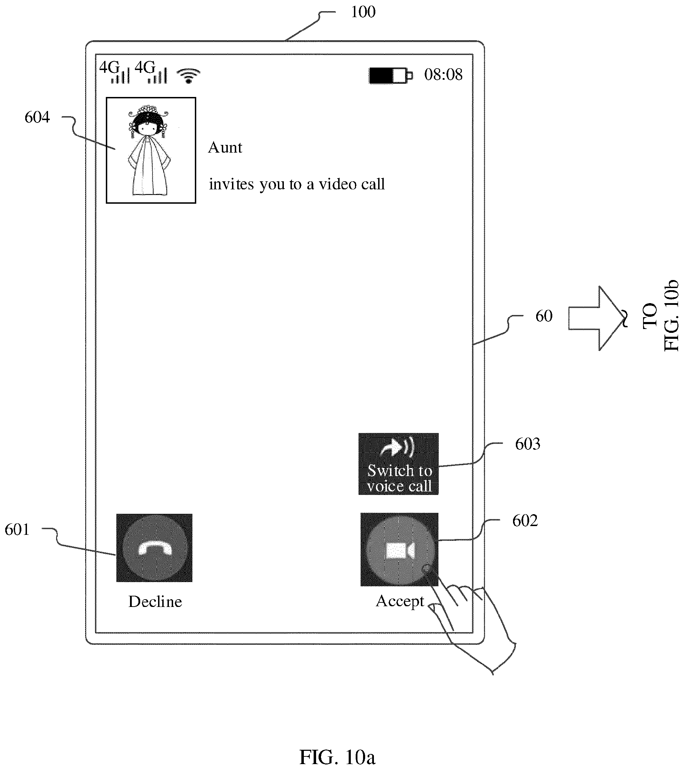

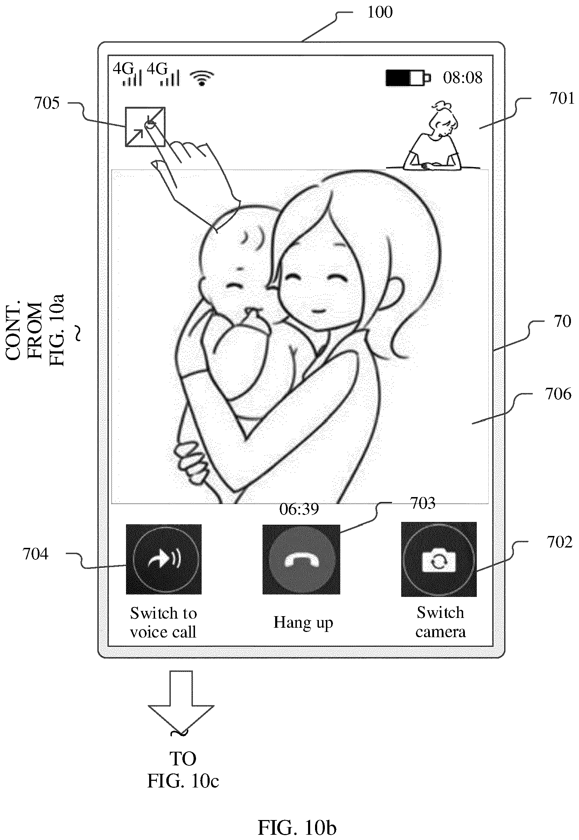

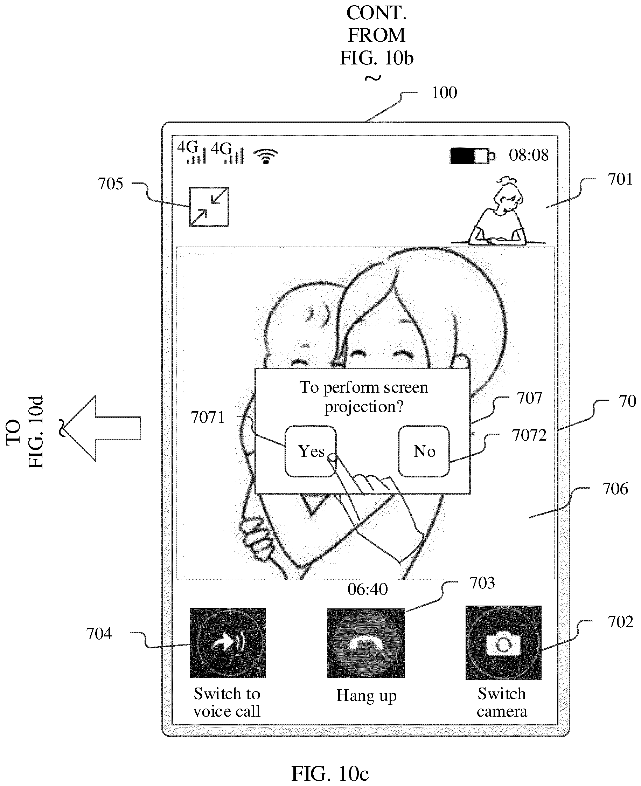

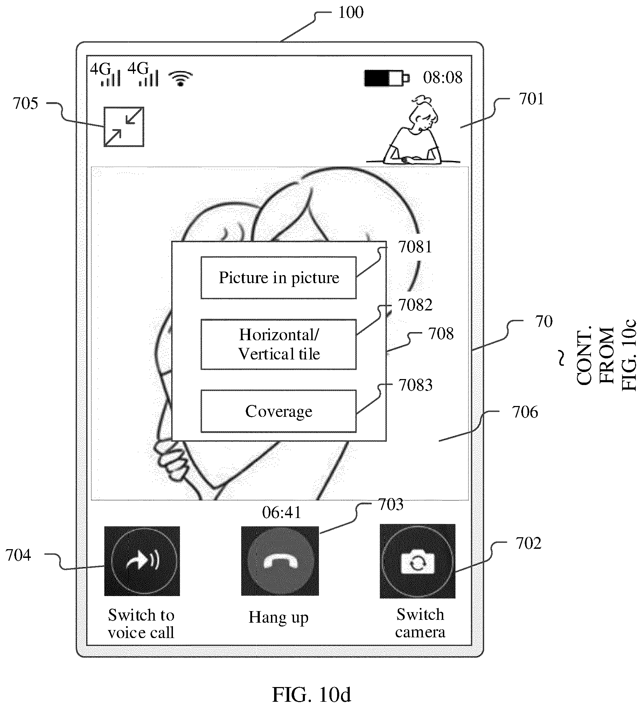

For example, FIG. 10a, FIG. 10b, FIG. 10c, and FIG. 10d are other schematic diagrams of interface interaction of a first electronic device according to an embodiment of this application. As shown in FIG. 10a, a chat request interface 60 includes: a rejection control 601, an answer control 602, a switch-to-voice answer control 603, a portrait icon 604, and the like. When the user taps the answer control 602, the first electronic device 100 invokes and opens the front-facing camera, and displays a video chat interface 70 shown in FIG. 10b.

S23. The user taps a screen projection/split control on the video chat interface.

S24. The first electronic device 100 receives a screen projection indication of the user for first media data.

As shown in FIG. 10b, the video chat interface 70 includes: an image 701 acquired by the front-facing camera of the first electronic device 100, a camera switch control 702, a hang-up control 703, a switch-to-voice chat control 704, a screen split control 705, a real-time video image 706, and the like. For ease of description, in the following description, a video of a video chat on the first electronic device 100 (namely, a video corresponding to the real-time video image 706) is referred to as a real-time video 500. For ease of description, in this embodiment of this application, the real-time video 500 may be used as the first media data for description.

When the user taps the screen split control 705, the social APP invokes a source capability of the first electronic device 100, and the first electronic device 100 outputs a screen projection prompt box 707 shown in FIG. 10c. As shown in FIG. 10c, the screen projection prompt box 707 includes a button 7071 and a button 7072. If the user wants to perform screen projection on the real-time video 500 onto the second electronic device 200 for watching, the user may tap the button 7071 (namely, a "Yes" button) on the screen projection prompt box 707 of the video chat interface 70 by using a finger or a stylus.

In some feasible implementations, the video chat interface 70 further includes a screen projection control. If the user wants to perform screen projection on the real-time video image 706 onto the second electronic device 200 for viewing, the user may tap the screen projection control on the video chat interface 70 by using a finger or a stylus. When the user taps the button 7071 or the screen projection control on the video chat interface 70, the first electronic device 100 receives a screen projection indication of the user for the real-time video 500. For example, a screen projection indication corresponding to the button 7071 is signaling "1", and a screen projection indication corresponding to the button 7072 is signaling "0". After the first electronic device 100 receives the screen projection instruction, the first electronic device 100 may detect whether a screen projection port of the first electronic device 100 outputs screen projection data (the video stream in FIG. 4A and FIG. 4B). If the screen projection port of the first electronic device 100 outputs the screen projection data, it indicates that the screen projection of the first electronic device 100 at this time is not the first projection, it may further indicate that a screen projection connection has been established between the first electronic device 100 and the second electronic device 200, and it may further indicate that a piece of data is being subject to screen projection in the first electronic device 100. If the screen projection port of the first electronic device 100 does not output the screen projection data, it indicates that the screen projection of the first electronic device 100 at this time is the first projection, and it may indicate that no data is being subject to screen projection in the first electronic device 100.

In some feasible implementations, in this embodiment of this application, an example in which the first media data is a real-time video corresponding to a video chat is used to describe the screen projection method provided in this embodiment of this application. However, in actual application, the first media data may alternatively be media data corresponding to a voice chat or a text chat. This is not limited in the screen projection method provided in this application. When the first media data is the media data corresponding to the voice chat, image data (namely, the first image data) in the first media data may be empty. When the first media data is the media data corresponding to the text chat, audio data (namely, first audio data) in the first media data may be empty.

S25. When detecting that the screen projection port of the first electronic device 100 outputs the screen projection data, the first electronic device 100 outputs screen projection selection information and prompts the user to select a screen projection manner from a plurality of screen projection manners, to perform screen projection.

S26. The first electronic device 100 determines a screen projection manner of the first image data and the second image data in response to the selection of the user.

In some feasible implementations, for ease of description, in this embodiment of this application, the video 400 may be used as the second media data for description. The screen projection data (such as the foregoing video stream) output by the screen projection port of the first electronic device 100 is generated by the video 400. The real-time video 500 includes the first image data, and the video 400 includes the second image data. When the screen projection port of the first electronic device 100 outputs the screen projection data, the first electronic device 100 outputs screen projection selection information including a plurality of screen projection manners, and prompts the user to select one screen projection manner to perform screen projection. For example, the first electronic device 100 outputs a screen projection manner selection box 708 shown in FIG. 10d. The screen projection manner selection box 708 shown in FIG. 10d includes a picture in picture screen projection manner 7081, a horizontal/vertical tile screen projection manner 7082, and a coverage screen projection manner 7083. The user may select, in the screen projection manner selection box 708, a screen projection manner that the user wants. The first electronic device 100 responds to the selection of the user and determines the screen projection manner selected by the user as the screen projection manner of the first image data and the second image data.

In some other feasible implementations, the screen projection data output by the screen projection port may be presented on the second electronic device 200, or may be presented on another electronic device (one or more other electronic devices other than the second electronic device 200). This is not limited in this embodiment of this application. If the screen projection data output by the screen projection port (the screen projection data may be the second media data) is presented on a third electronic device, the first electronic device 100 may synthesize the first image data in the first media data and the second image data in the second media data, and then perform screen projection on synthesized image data onto the second electronic device 200 for presentation. In this case, the third electronic device may no longer present images corresponding to the screen projection data.

S27. The first electronic device 100 synthesizes the first image data and the second image data based on the screen projection manner, to generate synthesized image data.

In some feasible implementations, the first electronic device 100 may synthesize a plurality of first image frames in the first image data and a plurality of second image frames in the second image data based on the screen projection manner, to obtain a plurality of pieces of synthesized image frame data. The first electronic device 100 may perform video compression coding on the plurality of pieces of synthesized image frame data, and then generate the synthesized image data. The first image data and the second image data both include one image frame on each time node, the plurality of first image frames are image frames of the first image data on a plurality of consecutive time nodes, and the plurality of second image frames are image frames of the second image data on a plurality of consecutive time nodes. In other words, the first electronic device 100 synthesizes, each time, synthesized image frame data (namely, the plurality of pieces of synthesized image frame data) in a time period (a time period determined by the plurality of consecutive time nodes), and then performs video compression coding, to obtain the synthesized image data. That is, the synthesized image data transmitted to the second electronic device 200 each time is image data in a time period (including a plurality of synthesized image frames), so that transmission efficiency can be improved. Optionally, the first electronic device 100 may synthesize one first image frame in the first image data and one second image frame in the second image data based on the screen projection manner, to obtain one piece of synthesized image frame data, and may perform video compression coding on the piece of synthesized image frame data, to generate synthesized image data. In this embodiment of this application, one piece of synthesized image frame data may alternatively be synthesized each time. That is, the synthesized image data transmitted by the first electronic device 100 to the second electronic device 200 includes only one synthesized image frame.

In some feasible implementations, the first electronic device 100 may synthesize image frames of the first image data and the second image data on same time nodes based on the foregoing screen projection manner, to obtain synthesized image frame data. An image frame of the first image data and an image frame of the second image data that are on one time node are used for generating one piece of synthesized image frame data. The first electronic device 100 may obtain a plurality of pieces of synthesized image frame data on a plurality of consecutive time nodes, and may perform video compression coding on the plurality of pieces of synthesized image frame data, to generate synthesized image data. In this embodiment of this application, an image frame of the first image data and an image frame of the second image data that are on a same time node may be synthesized, to synchronously present two pieces of data.

In some feasible implementations, if screen projection manners selected by the user are different, manners of generating the synthesized image data by the first electronic device 100 are also different. For details, refer to the following manner 1 to manner 3 of generating the synthesized image data:

In the manner 1 of generating the synthesized image data, the screen projection manner selected by the user is a picture in picture screen projection manner.

(a1) The first electronic device 100 compresses an image corresponding to each first image frame in the plurality of first image frames.

(a2) The first electronic device 100 superimposes a plurality of images corresponding to the plurality of first image frames after compression to a plurality of images corresponding to the plurality of second image frames based on a first relative position corresponding to the picture in picture screen projection manner, to obtain a plurality of synthesized images.

In some feasible implementations, for ease of description, in this embodiment of this application, real-time video image frames in the real-time video 500 may be used as the first image frames, and video image frames in the video 400 may be used as the second image frames Picture in picture may be understood as superimposing a larger picture or image and a smaller picture or image together for presentation. The first electronic device 100 obtains an image size and the first relative position that correspond to the picture in picture screen projection manner. The first relative position is used for representing a relative position when images corresponding to two image frames are synthesized into one synthesized image corresponding to the synthesized image frame data in the picture in picture screen projection manner. The first electronic device 100 obtains a plurality of real-time video image frames in the real-time video 500, and obtains a plurality of video image frames in the video 400. The first electronic device 100 compresses an image corresponding to each real-time video image frame in the plurality of real-time video image frames, where an image size of the image corresponding to each first image frame after compression is the same as the image size corresponding to the picture in picture screen projection manner. The first electronic device 100 performs the following operation for any real-time video image frame i in the plurality of real-time video image frames and any video image frame j in the plurality of video image frames: superimposing an image corresponding to the real-time video image frame i after compression to an image corresponding to the video image frame j based on the first relative position, to obtain a synthesized image. N images corresponding to N real-time video image frames and N images corresponding to N video image frames are synthesized into N synthesized images, where N is an integer greater than or equal to 2. A time node on which the real-time video image frame i is located may be the same as a time node on which the video image frame j is located. In other words, the first electronic device 100 superimposes, each time, an image corresponding to one real-time video image frame after compression to an image corresponding to one video image frame based on the first relative position corresponding to the picture in picture screen projection manner, to obtain a synthesized image. The first electronic device 100 cycles the foregoing image superimposition process for a plurality of times, to obtain a plurality of synthesized images.

For example, when the image size is in units of pixels, it is assumed that the image size corresponding to the picture in picture screen projection manner preset in the first electronic device 100 is 200x200 pixels, and the first relative position is an upper left position (indicating that a real-time video image is located in an upper left corner of a video image). It is assumed that an image size of an image corresponding to each real-time video image frame is 800×800 pixels, and an image size of an image corresponding to each video image frame is 800×800 pixels. The first electronic device 100 compresses the image size: 800×800 pixels, of the image corresponding to each real-time video image frame to 200×200 pixels, to obtain an image corresponding to each real-time video image frame after compression. The first electronic device 100 covers 200×200 pixels in an image corresponding to any real-time video image frame after compression on 200×200 pixels at an upper left position in an image (including 800×800 pixels) corresponding to any video image frame, to obtain a synthesized image with 800×800 pixels. For example, an image may be represented by using a matrix, where one element in the matrix represents one pixel. The image corresponding to the real-time video image frame is represented by using a matrix S, where a size (namely, a dimension size) of S is 800 rows and 800 columns. The image corresponding to the real-time video image frame after compression is represented by using a matrix S', where a size of S' is 200 rows and 200 columns. The image corresponding to the video image frame is represented by using V, where a size of V is also 800 rows and 800 columns. The first electronic device 100 may replace a total of 200×200 elements in 600^{th} to 800^{th} columns in 0^{th} to 200^{th} rows of V with 200×200 elements in S', to obtain a matrix C, where an image represented by C is a synthesized image. A size of C is 800 rows and 800 columns. In other words, the first electronic device may superimpose two images by superimposing pixel matrices of the images.

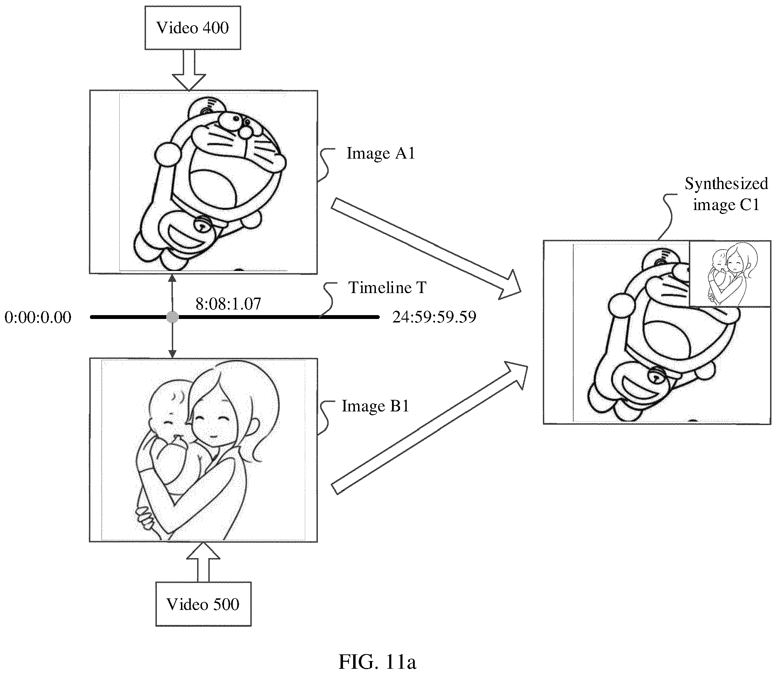

FIG. 11a is a schematic diagram of synthesizing images according to an embodiment of this application. A timeline T in FIG. 11a represents clock information of the first electronic device 100, an image A1 is an image corresponding to a video image frame of the video 400 at 8:08:1.07, and an image B1 is an image corresponding to a real-time video image frame of the video 500 at 8:08:1.07. The first electronic device 100 compresses the image A1, and superimposes the image A1 after compression to an upper left position of the image B1, to obtain a synthesized image C1 shown in FIG. 11a.

(a3) The first electronic device 100 obtains a plurality of pieces of synthesized image frame data based on image data corresponding to the plurality of synthesized images.

In some feasible implementations, image data corresponding to a synthesized image is synthesized image frame data. The synthesized image may be expressed as pixels, and the synthesized image frame data may be image data that can be recognized by a machine, for example, binary image data obtained after pixel conversion.

(a4) The first electronic device 100 performs compression coding on the plurality of pieces of synthesized image frame data, and then generates the synthesized image data.

In some feasible implementations, the first electronic device 100 performs video compression coding (for example, H.264 coding) on the obtained plurality of pieces of synthesized image frame data, and then generate the synthesized image data.

In the manner 2 of generating the synthesized image data, the screen projection manner selected by the user is a horizontal/vertical tile screen projection manner.

(b1) The first electronic device 100 compresses a plurality of images corresponding to a plurality of first image frames and a plurality of images corresponding to a plurality of second image frames based on an image size parameter corresponding to the horizontal/vertical tile screen projection manner.

(b2) The first electronic device 100 synthesizes the plurality of images corresponding to the plurality of first image frames after compression and the plurality of images corresponding to the plurality of second image frames after compression based on an image position parameter corresponding to the tile screen projection manner, to obtain a plurality of synthesized images.

In some feasible implementations, horizontal tile may be understood as that two pictures or images are horizontally arranged and do not overlap each other, and vertical tile may be understood as that two pictures or images are vertically arranged and do not overlap each other. For ease of description, the following description uses a horizontal tile screen projection manner as an example. The first electronic device 100 obtains an image size parameter (including a first image size and a second image size) and an image position parameter (including a second relative position, for example, a left-right position, indicating that a video image of the video 400 and a real-time video image of the real-time video 500 are arranged in a left-right manner) that correspond to the preset horizontal tile screen projection manner. The image position parameter is used for representing a relative position when images corresponding to two image frames are synthesized into one synthesized image corresponding to the synthesized image frame data. The first electronic device 100 obtains a plurality of real-time video image frames (namely, the first image frames) in the real-time video 500, and obtains video images (namely, the second image frames) in the video 400. The first electronic device 100 compresses an image corresponding to each real-time video image frame in the plurality of real-time video image frames, where an image size of the image corresponding to each real-time video image frame after compression is the same as the first image size, and compresses an image corresponding to each video image frame in the plurality of video image frames, where an image size of the image corresponding to each video image frame after compression is the same as the second image size. The first electronic device 100 performs the following operation for any real-time video image frame i in the plurality of real-time video image frames and any video image frame j in the plurality of video image frames: splicing an image corresponding to the real-time video image frame i after compression and an image corresponding to the video image frame j after compression based on a left-right position, to obtain a synthesized image. N images corresponding to N real-time video image frames and N images corresponding to N video image frames are spliced into N synthesized images, where N is an integer greater than or equal to 2. A time node on which the real-time video image frame i is located may be the same as a time node on which the video image frame j is located. In other words, the first electronic device 100 splices, each time, an image corresponding to one real-time video image frame after compression and an image corresponding to one video image frame after compression based on the second relative position corresponding to the horizontal tile screen projection manner, to obtain a synthesized image. The first electronic device 100 cycles the foregoing image splicing process for a plurality of times, to obtain a plurality of synthesized images.

For example, when the image size is in units of pixels, it is assumed that the first image size and the second image size that correspond to the horizontal tile screen projection manner preset in the first electronic device 100 are both 800x400 pixels. The second relative position corresponding to the preset horizontal tile screen projection manner is a left-right position. It is assumed that an image size of an image corresponding to each real-time video image frame is 800x800 pixels, and an image size of an image corresponding to each video image frame is 800x800 pixels. The first electronic device 100 compresses the image size: 800x800 pixels, of the image corresponding to each real-time video image frame to 800x400 pixels, to obtain an image corresponding to each real-time video image frame after compression, and also compresses the image size: 800×800 pixels, of the image corresponding to each video image frame in the plurality of video image frames to 800×400 pixels, to obtain an image corresponding to each video image frame after compression. The first electronic device 100 splices the image (including 800×400 pixels) corresponding to any real-time video image frame after compression and the image (including 800×400 pixels) corresponding to any video image frame after compression based on the left-right position, to obtain a synthesized image with 800×800 pixels. For example, an image may be represented by using a matrix, where one element in the matrix represents one pixel. The image corresponding to the real-time video image frame is represented by using a matrix S, where a size of S is 800 rows and 800 columns. The image corresponding to any real-time video image frame after compression is represented by using a matrix S', where a size of S' is 800 rows and 400 columns. The image corresponding to the video image frame is represented by using V, where a size of V is also 800 rows and 800 columns. The image corresponding to any video image frame after compression is represented by using a matrix V', where a size of V' is 800 rows and 400 columns. The first electronic device 100 may perform image splicing on V' and S' based on the left-right position, to obtain a matrix C with 800 rows and 800 columns, where an image represented by C is the synthesized image. First 400 columns of elements of C are the same as those of V' and last 400 columns of elements of C are the same as those of S', or the first 400 columns of elements of C are the same as those of S', and the last 400 columns of elements of C are the same as those of V'. This is not limited in this embodiment of this application. In other words, the first electronic device may splice two images by splicing pixel matrices of the images.

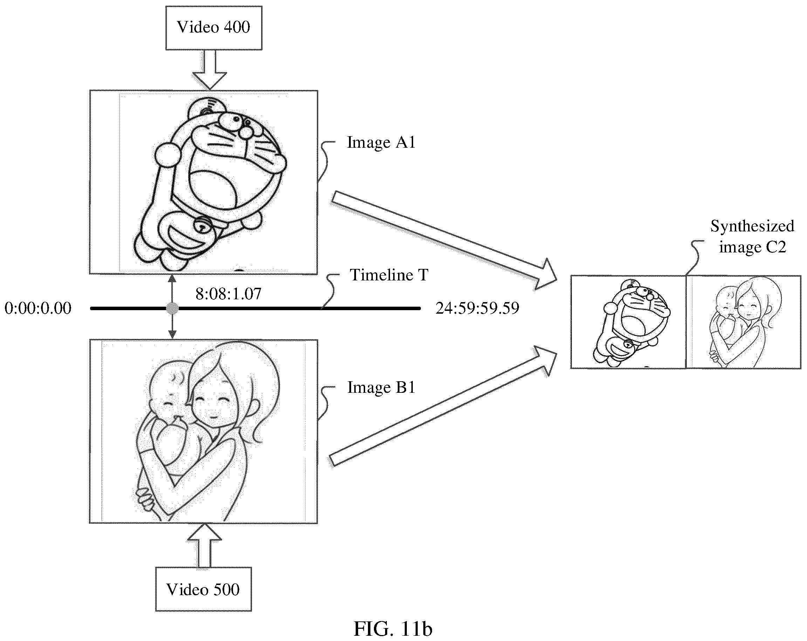

FIG. 11b is another schematic diagram of synthesizing images according to an embodiment of this application. A timeline T in FIG. 11b represents clock information of the first electronic device 100, an image A1 is an image corresponding to a video image frame of the video 400 at 8:08:1.07, and an image B1 is an image corresponding to areal-time video image frame of the video 500 at 8:08:1.07. The first electronic device 100 separately compresses the image A1 and the image B1. The first electronic device 100 splices the image A1 after compression and the image B1 after compression in a left-right manner, to obtain a synthesized image C2 shown in FIG. 11b.

In some feasible implementations, refer to the horizontal tile screen projection manner for the vertical tile screen projection manner. An image size parameter (including a third image size and a fourth image size) and an image position parameter (including a third relative position, for example, an up-down position) that correspond to the vertical tile screen projection manner. The first electronic device 100 compresses an image corresponding to each real-time video image frame in the plurality of real-time video image frames, where an image size of the image corresponding to each real-time video image frame after compression is the same as the third image size, and compresses an image corresponding to each video image frame in the plurality of video image frames, where an image size of the image corresponding to each video image frame after compression is the same as the fourth image size. The first electronic device 100 splices the image corresponding to any real-time video image frame after compression and the image corresponding to any video image frame after compression based on the up-down position, to obtain a synthesized image. N images corresponding to N real-time video image frames and N images corresponding to N video image frames are spliced into N synthesized images, where N is an integer greater than or equal to 2. A time node on which the real-time video image frame is located may be the same as a time node on which the video image frame is located.

(b3) The first electronic device 100 obtains a plurality of pieces of synthesized image frame data based on image data corresponding to the plurality of synthesized images.

(b4) The first electronic device 100 performs compression coding on the plurality of pieces of synthesized image frame data, and then generates the synthesized image data.

In some feasible implementations, refer to implementations of the foregoing (a3) and (a4) for implementations of (b3) and (b4). Details are not described herein again.

In the manner 3 of generating the synthesized image data, the screen projection manner selected by the user is a coverage screen projection manner.

(c1) The first electronic device 100 terminates output of the screen projection data at the screen projection port, to make the second media data empty.

In some feasible implementations, coverage may be understood as that one picture (image) completely covers another picture (image). When the user taps the coverage screen projection manner 7083 in the screen projection selection box 708, the first electronic device 100 exits screen projection of the video 400, that is, the first electronic device 100 terminates output of the screen projection data (for example, the video 400) at the screen projection port, and then the second media data is empty.

(c2) The first electronic device 100 obtains a plurality of first image frames of the first image data on a plurality of consecutive time nodes.

(c3) The first electronic device 100 performs compression coding on the plurality of first image frames, and then generates synthesized image data.

In some feasible implementations, the first electronic device 100 exits screen projection of the video 400. In this case, it is equivalent to that the screen projection of the real-time video 500 is the first screen projection. Then, the first electronic device 100 obtains a plurality of real-time video image frames in the real-time video 500, and performs video compression coding (for example, H.264) on the plurality of real-time video image frames, and then generates the synthesized image data. The plurality of real-time video image frames are image frames of the first image data on the plurality of consecutive time nodes. Optionally, after obtaining the plurality of real-time video image frames, the first electronic device 100 may compress an image corresponding to each real-time video image frame in the plurality of real-time video image frames, where an image size of the image corresponding to each real-time video image frame after compression is the same as an image size corresponding to the coverage screen projection manner, and may perform video compression coding on the images corresponding to the plurality of real-time video image frames after compression, to generate the synthesized image data.

In some other feasible implementations, if the screen projection manner selected by the user is the coverage screen projection manner, a manner of generating the synthesized image data may alternatively be: (d1) The first electronic device 100 obtains an image position parameter (for example, a fourth relative position) corresponding to the preset coverage screen projection manner, where the image position parameter is used for representing a relative position between two different images. (d2) The first electronic device 100 obtains a plurality of first image frames of the first image data on a plurality of consecutive time nodes, and obtains a plurality of second image frames of the second image data on a plurality of consecutive time nodes. (d3) The first electronic device 100 performs the following operation for any first image frame i in the plurality of first image frames and any second image frame j in the plurality of second image frames: superimposing an image corresponding to the first image frame i to an image corresponding to the second image frame j based on the fourth relative position, to obtain a synthesized image. N images corresponding to N real-time video image frames and N images corresponding to N video image frames are synthesized into N synthesized images, where N is an integer greater than or equal to 2. (d4) The first electronic device 100 obtains a plurality of pieces of synthesized image frame data based on image data corresponding to a plurality of synthesized images. (d5) The first electronic device 100 performs compression coding on the plurality of pieces of synthesized image frame data, and then generates the synthesized image data.

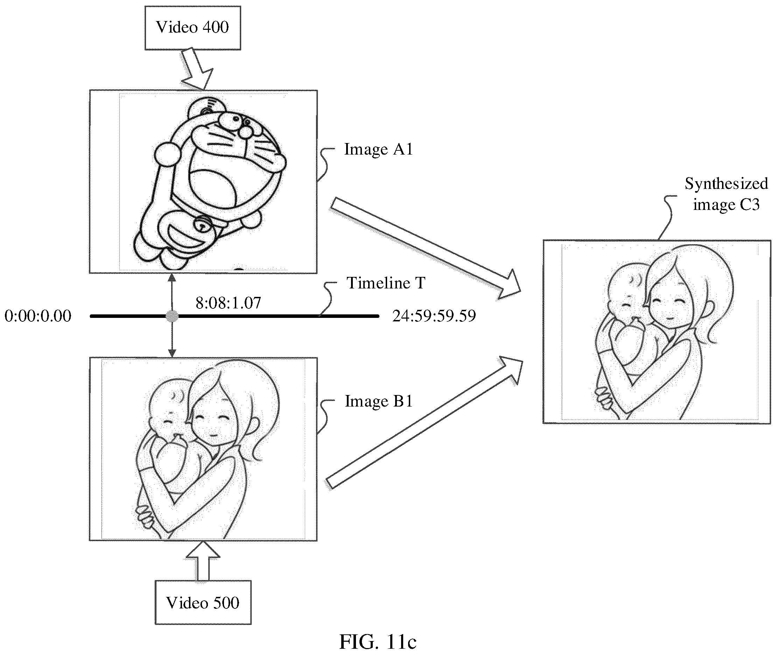

FIG. 11c is still another schematic diagram of synthesizing images according to an embodiment of this application. A timeline T in FIG. 11c represents clock information of the first electronic device 100, an image A1 is an image corresponding to a video image frame of the video 400 at 8:08:1.07, and an image B1 is an image corresponding to a real-time video image frame of the video 500 at 8:08:1.07. The first electronic device 100 superimposes the image A1 into the image B1 in a border-alignment manner, to obtain a synthesized image C3 shown in FIG. 11c.

S28. The first electronic device 100 synthesizes first audio data included in the first media data and second audio data included in the second media data, to generate synthesized audio data.

In some feasible implementations, for ease of description, in this embodiment of this application, audio data in the real-time video 500 may be used as the first audio data, and audio data in the video 400 may be used as the second audio data for description. The first electronic device 100 may obtain first audio of the audio data of the real-time video 500 in a time period determined by a plurality of consecutive time nodes, and may obtain second audio of the audio data of the video 400 in this time period. The first electronic device 100 may replace the second audio with the first audio, to obtain synthesized audio, and may perform audio compression coding on the synthesized audio, to obtain the synthesized audio data.

In some feasible implementations, if the second audio data included in the second media data is empty, the first electronic device 100 may directly perform audio compression coding on the first audio of the audio data of the real-time video 500 in the time period determined by the plurality of consecutive time nodes, to obtain the synthesized audio data.

In some feasible implementations, an execution sequence between step S27 and step S28 is not limited. For example, step S27 may be performed before step S28, or step S27 may be performed after step S28, or step S27 and step S28 may be simultaneously performed, or the like.

S29. The first electronic device 100 sends the synthesized image data and the synthesized audio data to the second electronic device 200 by using the screen projection port.

S30. After receiving the synthesized image data and the synthesized audio data, the second electronic device 200 processes the synthesized image data into corresponding synthesized images based on the screen projection manner for output and display, and plays synthesized audio corresponding to the synthesized audio data.

In some feasible implementations, the first electronic device 100 encapsulates the synthesized image data and the synthesized audio data into one data packet, and outputs the data packet to the second electronic device 200 by using a video streaming media protocol bearer. After receiving the data packet, the second electronic device 200 performs video streaming media protocol receiving processing and video and audio decoding processing on the data packet, and then renders and outputs the data packet. In this case, the second electronic device 200 displays the synthesized images corresponding to the synthesized image data based on the screen projection manner, and plays the synthesized audio corresponding to the synthesized audio data. A format of the data packet into which the synthesized image data and the synthesized audio data are encapsulated is any data format that can be received by the second electronic device 200, for example, an MP4 format. When the first electronic device 100 performs screen projection on the synthesized image data of both the real-time video 500 and the video 400 onto the second electronic device 200 for display, pictures including the synthesized images displayed on the second electronic device 200 are different in different screen projection manners.

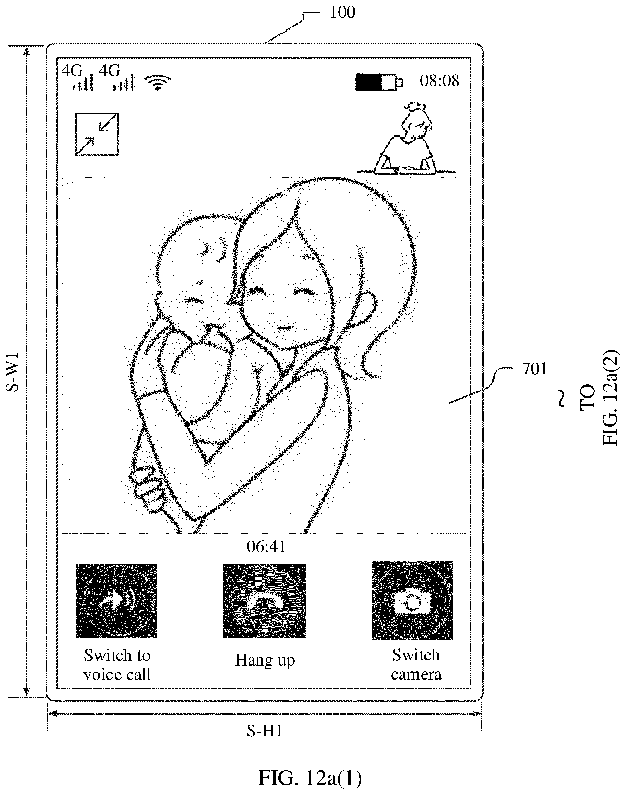

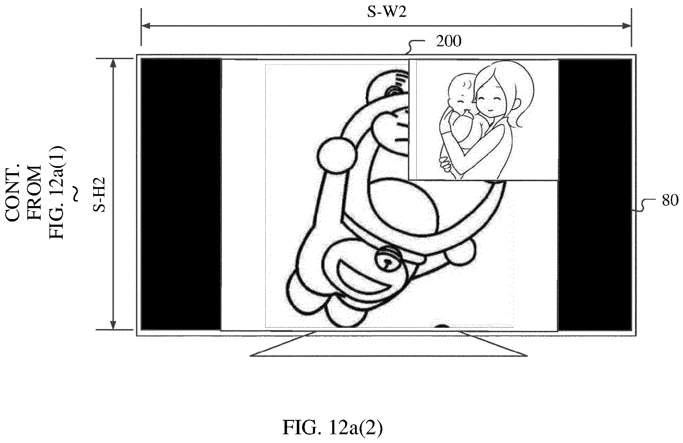

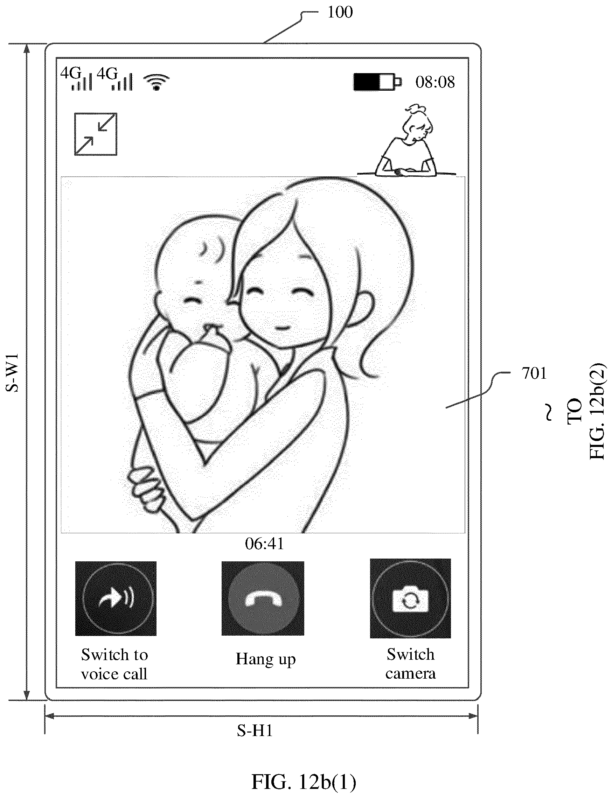

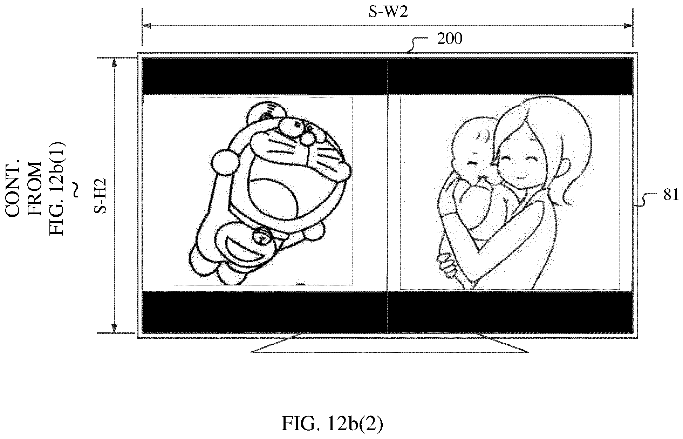

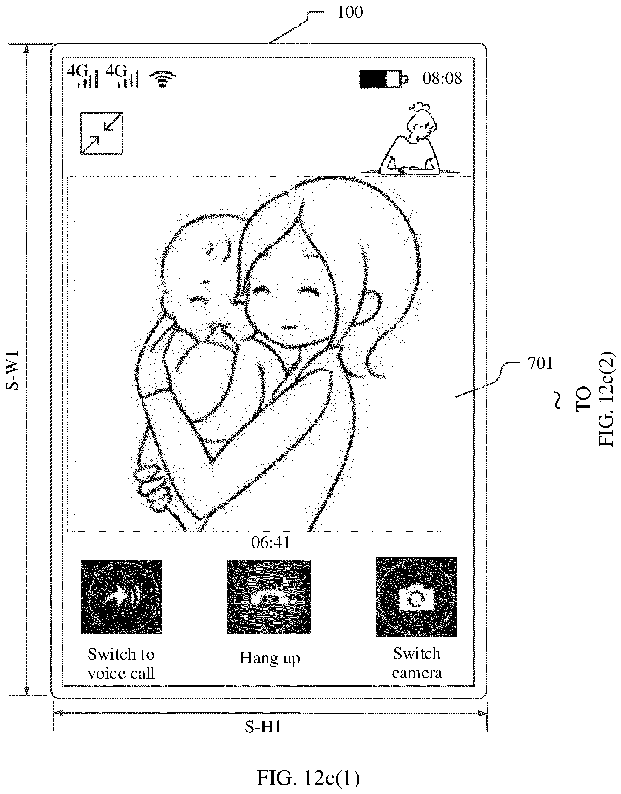

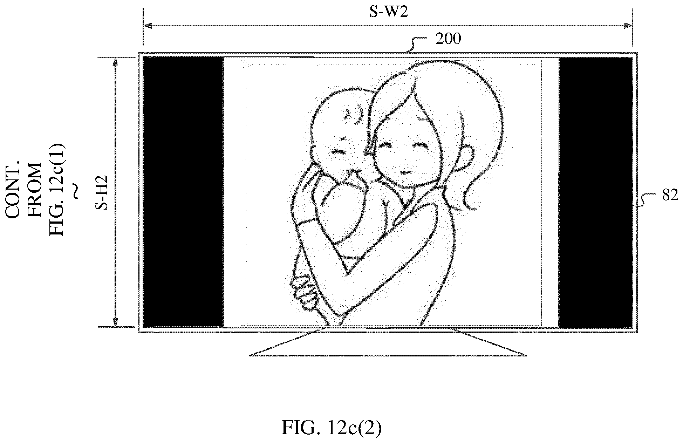

Optionally, when displaying a synthesized image, the second electronic device 200 may adjust an aspect ratio of the synthesized image to be the same as a screen aspect ratio of the second electronic device 200 by adding a black border to the synthesized image, or may scale a size of the synthesized image, so that the synthesized image spreads over the entire screen of the second electronic device 200. FIG. 12a(1), FIG. 12a(2), FIG. 12b(1), FIG. 12b(2), FIG. 12c(1), and FIG. 12c(2) are other schematic diagrams of an interface of a first electronic device and a second electronic device according to an embodiment of this application. A screen aspect ratio of the first electronic device 100 is S-W1: S-H1, and a screen aspect ratio of the second electronic device 200 is S-W2: S-H2. As shown in FIG. 12a(1) and FIG. 12a(2), the real-time video image 706 of the real-time video 500 is displayed on the first electronic device 100 in full screen, and a play picture 80 including a synthesized image corresponding to the picture in picture screen projection manner is displayed on the second electronic device 200. As shown in FIG. 12b(1) and FIG. 12b(2), the real-time video image 706 of the real-time video 500 is displayed on the first electronic device 100 in full screen, and a play picture 81 including a synthesized image corresponding to the horizontal tile screen projection manner is displayed on the second electronic device 200. As shown in FIG. 12c(1) and FIG. 12c(2), the real-time video image 701 of the real-time video 500 is displayed on the first electronic device 100 in full screen, and a play picture 82 including a synthesized image corresponding to the coverage screen projection manner is displayed on the second electronic device 200.

In some feasible implementations, when the user taps the screen split control 705 on the video chat interface 70 again, the first electronic device 100 exits screen projection of the real-time video 500, that is, the first electronic device 100 terminates outputting the image data and the audio data that correspond to the real-time video 500. In this case, the screen projection connection between the first electronic device 100 and the second electronic device 200 is not broken. In some other embodiments, when the user taps the screen split control 705 on the video play interface 70 again, the first electronic device 100 breaks the screen projection connection to the second electronic device 200.

In some feasible implementations, in the screen projection method provided in this embodiment of this application, screen projection is performed on the media data of the social APP (for example, the real-time video 500) when the media data of the video APP (for example, the video 400) has been subject to screen projection. However, in actual application, in the screen projection method provided in this embodiment of this application, alternatively, screen projection may be performed on the media data of the video APP when the media data of the social APP has been subject to screen projection. In the screen projection method provided in this application, a screen projection sequence of the media data of the video APP and the media data of the social APP is not limited.

In some other feasible implementations, a screen projection manner for screen projection for a plurality of times is preset in the first electronic device 100. When the user taps the answer control on the video chat request interface, the first electronic device 100 responds to a tap operation of the user, opens the front-facing camera, and displays the video chat interface, and at the same time, the first electronic device 100 further receives a screen projection indication generated by tapping the answer control by the user, and may detect whether the screen projection port of the first electronic device 100 outputs the screen projection data. If detecting that the screen projection port of the first electronic device 100 outputs the screen projection data, the first electronic device 100 may synthesize the first image data and the second image data based on the preset screen projection manner, to generate the synthesized image data, and may synthesize the first audio data included in the first media data and the second audio data included in the second media data, to generate the synthesized audio data. Finally, the first electronic device 100 may send the synthesized image data and the synthesized audio data to the second electronic device 200 by using the screen projection port, so that the second electronic device 200 displays the synthesized images corresponding to the synthesized image data and plays the synthesized audio corresponding to the synthesized audio data.

In this embodiment of this application, after projecting a video in the video APP on the first electronic device onto the second electronic device for watching, the user then triggers the first electronic device to synthesize the real-time video in the social APP on the first electronic device and the video of the video APP, and then performs screen projection on the synthesized video onto the second electronic device for watching. In this way, the user can perform a screen projection operation for a plurality of times on the first electronic device. In addition, two pieces of image data may be fused into one piece of image data for screen projection onto the second electronic device for presentation, so that the user can watch a video and perform social interaction on the second electronic device, richness of content for screen projection is increased, diversity of screen projection manners is increased, and user experience of screen projection is enhanced.

The implementations of this application may be arbitrarily combined, to achieve different technical effects.

In the foregoing embodiment, the implementations may be entirely or partially implemented by using software, hardware, firmware, or any combination thereof. When software is used for implementation, the implementations may be entirely or partially implemented in a form of a computer program product. The computer program product includes one or more computer instructions. When the computer program instructions are loaded and executed on a computer, procedures or functions according to this application are entirely or partially generated. The computer may be a general-purpose computer, a special-purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, wireless, or microwaves) manner. The computer-readable storage medium may be any usable medium that can be accessed by a computer, or a data storage device such as a server or a data center that integrates one or more usable mediums. The usable medium may be a magnetic medium (for example, a floppy disk, a hard disk, or a magnetic tape), an optical medium (for example, a DVD), a semiconductor medium (for example, a solid state disk (Solid State Disk)), or the like.

In conclusion, the foregoing is merely an embodiment of the technical solution of this application, but is not intended to limit the protection scope of this application. Any modification, equivalent replacement, improvement, or the like made based on the disclosure of this application shall fall within the protection scope of this application.

## Claims

1. A screen projection method, comprising:
determining, by a first electronic device, a screen projection manner of first image data and second image data when receiving a screen projection indication for first media data and detecting that a screen projection port of the first electronic device outputs screen projection data, wherein the screen projection data output by the screen projection port is generated based on second media data, the first media data comprises first image data, and the second media data comprises second image data;
synthesizing, by the first electronic device, the first image data and the second image data based on the screen projection manner, to generate synthesized image data; and
outputting, by the first electronic device, the synthesized image data to a second electronic device by using the screen projection port, to trigger the second electronic device to display synthesized images corresponding to the synthesized image data based on the screen projection manner.

2. The method according to claim 1, wherein the synthesizing, by the first electronic device, the first image data and the second image data based on the screen projection manner, to generate synthesized image data comprises:
synthesizing, by the first electronic device, a plurality of first image frames and a plurality of second image frames based on the screen projection manner, to obtain a plurality of pieces of synthesized image frame data, wherein the first image data and the second image data both comprise one image frame on each time node, the plurality of first image frames are image frames of the first image data on a plurality of consecutive time nodes, and the plurality of second image frames are image frames of the second image data on a plurality of consecutive time nodes; and
generating, by the first electronic device, the synthesized image data based on the plurality of pieces of synthesized image frame data.

3. The method according to claim 2, wherein the generating, by the first electronic, the synthesized image data based on the plurality of pieces of synthesized image frame data comprises:
performing, by the first electronic device, compression coding on the plurality of pieces of synthesized image frame data, and then generating the synthesized image data.

4. The method according to claim 2 or 3, wherein any piece of synthesized image frame data of the plurality of pieces of synthesized image frame data is obtained by synthesizing any first image frame in the plurality of first image frames and a second image frame that corresponds to the first image frame and that is in the plurality of second image frames, and a time node on which the first image frame is located is the same as a time node on which the second image frame corresponding to the first image frame is located.

5. The method according to claim 2 or 3, wherein the screen projection manner comprises a picture in picture screen projection manner, and the synthesizing, by the first electronic device, a plurality of first image frames and a plurality of second image frames based on the screen projection manner, to obtain a plurality of pieces of synthesized image frame data comprises:
compressing, by the first electronic device, an image corresponding to each first image frame in the plurality of first image frames, wherein an image size of the image corresponding to each first image frame after compression is the same as an image size corresponding to the picture in picture screen projection manner;
superimposing, by the first electronic device, a plurality of images corresponding to the plurality of first image frames after compression to a plurality of images corresponding to the plurality of second image frames based on a first relative position corresponding to the picture in picture screen projection manner, to obtain a plurality of synthesized images; and
obtaining, by the first electronic device, the plurality of pieces of synthesized image frame data based on image data corresponding to the plurality of synthesized images, wherein
the first relative position is used for representing a relative position when images corresponding to two image frames are synthesized into one synthesized image corresponding to the synthesized image frame data in the picture in picture screen projection manner.

6. The method according to claim 2 or 3, wherein the screen projection manner is a tile screen projection manner, and the synthesizing, by the first electronic device, a plurality of first image frames and a plurality of second image frames based on the screen projection manner, to obtain a plurality of pieces of synthesized image frame data comprises:
compressing, by the first electronic device, a plurality of images corresponding to the plurality of first image frames and a plurality of images corresponding to the plurality of second image frames based on an image size parameter corresponding to the tile screen projection manner, and synthesizing, based on an image position parameter corresponding to the tile screen projection manner, the plurality of images corresponding to the plurality of first image frames after compression and the plurality of images corresponding to the plurality of second image frames after compression, to obtain a plurality of synthesized images; and
obtaining, by the first electronic device, the plurality of pieces of synthesized image frame data based on image data corresponding to the plurality of synthesized images, wherein
the image position parameter is used for representing a relative position when images corresponding to two image frames are synthesized into one synthesized image corresponding to the synthesized image frame data.

7. The method according to claim 6, wherein the image size parameter corresponding to the tile screen projection manner comprises a first image size and a second image size, and the image position parameter corresponding to the tile screen projection manner comprises a second relative position; and
the compressing, by the first electronic device, a plurality of images corresponding to the plurality of first image frames and a plurality of images corresponding to the plurality of second image frames based on an image compression parameter corresponding to the tile screen projection manner, and synthesizing, based on an image position parameter corresponding to the tile screen projection manner, the plurality of images corresponding to the plurality of first image frames after compression and the plurality of images corresponding to the second image frames after compression, to obtain a plurality of synthesized images comprises:
compressing, by the first electronic device, an image corresponding to each first image frame in the plurality of first image frames, and compressing an image corresponding to each first image frame in the plurality of second image frames, wherein an image size of the image corresponding to each first image frame after compression is the same as the first image size, and an image size of the image corresponding to each second image frame after compression is the same as the second image size; and
splicing the plurality of compressed images corresponding to the plurality of first image frames after compression and the plurality of compressed images corresponding to the plurality of second image frames after compression based on the second relative position, to obtain the plurality of synthesized images.

8. The method according to any one of claims 1 to 7, wherein the second media data further comprises audio data, and the method further comprises:
further outputting, by the first electronic device, the audio data to the second electronic device by using the screen projection port when outputting the synthesized image data to the second electronic device by using the screen projection port, to trigger the second electronic device to display the synthesized images corresponding to the synthesized image data based on the screen projection manner and play audio corresponding to the audio data.

9. The method according to claim 8, wherein the further outputting, by the first electronic device, the audio data to the second electronic device by using the screen projection port comprises: performing, by the first electronic device, compression coding on the audio data, and then outputting the audio data to the second electronic device by using the screen projection port.

10. The method according to any one of claims 1 to 7, wherein the first media data further comprises first audio data, and the second media data further comprises second audio data; and the method further comprises:
when the first electronic device synthesizes the first image data and the second image data based on the screen projection manner, to generate the synthesized image data, synthesizing, by the first electronic device, the first audio data and the second audio data, to generate synthesized audio data; and
further outputting, by the first electronic device, the synthesized audio data to the second electronic device by using the screen projection port when outputting the synthesized image data to the second electronic device by using the screen projection port, to trigger the second electronic device to display the synthesized images corresponding to the synthesized image data based on the screen projection manner and play synthesized audio corresponding to the synthesized audio data.

11. The method according to claim 10, wherein the synthesizing, by the first electronic device, the first audio data and the second audio data, to generate synthesized audio data comprises:
replacing, by the first electronic device, second audio with first audio, to obtain the synthesized audio, wherein the first audio is audio data of the first audio data in a time period determined by a plurality of consecutive time nodes, and the second audio is audio data of the second audio data in the time period; and
performing, by the first electronic device, compression coding on the synthesized audio, and then generating the synthesized audio data.

12. The method according to any one of claims 1 to 11, wherein the determining, by a first electronic device, a screen projection manner of first image data and second image data comprises:
outputting, by the first electronic device, screen projection selection information, wherein the screen projection selection information is used for prompting a user to select one screen projection manner from a plurality of screen projection manners, to perform screen projection, and the plurality of screen projection manners comprise a picture in picture screen projection manner, a tile screen projection manner, and/or a coverage screen projection manner; and
determining, by the first electronic device, the screen projection manner of the first image data and the second image data in response to the selection of the user.

13. The method according to any one of claims 1 to 12, wherein the first media data is derived from a social application, and the second media data is derived from audio and video applications.

14. The method according to any one of claims 1 to 13, wherein the screen projection port is a wireless screen projection port, and is configured to establish, by the first electronic device, a wireless screen projection connection with the second electronic device based on a wireless display standard Miracast, to transmit the screen projection data and the synthesized image data.

15. An electronic device, wherein the electronic device is used as a first electronic device and comprises a processor, an input device, an output device, and a memory, wherein the memory is configured to store computer programs, the computer programs comprise program instructions, and when the processor runs the program instructions, the first electronic device is enabled to perform the method according to any one of claims 1 to 14.

16. A screen projection system, comprising the first electronic device according to claim 15, and a second electronic device, wherein
the second electronic device is configured to: receive the synthesized image data output by the first electronic device, and display synthesized images corresponding to the synthesized image data.

17. A computer-readable storage medium, wherein the computer-readable storage medium stores computer programs, the computer programs comprise program instructions, and when the program requests are run by a computer, the computer is enabled to perform the method according to any one of claims 1 to 14.
